(19) Europäisches Patentamt
European Patent Office
Office européen des brevets

(11) Veröffentlichungsnummer: **0 079 862**
**B1**

(12) # EUROPÄISCHE PATENTSCHRIFT

(45) Veröffentlichungstag der Patentschrift: **15.01.86**

(21) Anmeldenummer: **82810491.9**

(22) Anmeldetag: **15.11.82**

(51) Int. Cl.⁴: **C 09 B 1/20,** C 07 C 97/24, D 06 P 1/16, D 06 P 1/41, C 07 C 121/78, C 07 C 120/00

(54) **1,4-Diaminoanthrachinonverbindungen.**

(30) Priorität: **18.11.81 CH 7410/81**

(43) Veröffentlichungstag der Anmeldung: **25.05.83 Patentblatt 83/21**

(45) Bekanntmachung des Hinweises auf die Patenterteilung: **15.01.86 Patentblatt 86/3**

(84) Benannte Vertragsstaaten: **CH DE FR GB LI**

(73) Patentinhaber: **CIBA-GEIGY AG, Klybeckstrasse 141, CH-4002 Basel (CH)**

(72) Erfinder: **Adam, Jean-Marie, Dr., Rue de Village Neuf 60 D, F-68300 Rosenau (FR)**

(56) Entgegenhaltungen:
**EP-A-0 023 645**
**FR-A-2 115 395**
**FR-A-2 313 357**
**FR-A-2 468 585**
**US-A-2 496 414**

**CHEMICAL ABSTRACTS, Band 83, Nr. 10, 8. September 1975, Seite 109, Nr. 81110z, Columbus, Ohio, USA**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

EP 0 079 862 B1

**Beschreibung**

Die Erfindung betrifft neue 1, 4-Diaminoanthrachinonverbindungen, Verfahren zu deren Herstellung, sowie deren Verwendung als Farbstoffe zum FÄrben und Bedrucken von Textilmaterialien und neue Zwischenprodukte.

Die neuen 1,4-Diaminoanthrachinonverbindungen entsprechen der Formel I

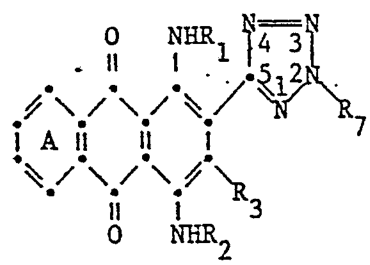
(I),

worin bedeuten:

$R_1$ und $R_2$ unabhÄngig voneinander Wasserstoff, einen gegebenenfalls substituierten $C_1$-$C_6$ Alkylrest, einen gegebenenfalls substituierten $C_5$-$C_8$ Cycloalkylrest oder einen gegebenenfalls substituierten Phenylrest;

$R_3$ Wasserstoff, Cyan oder $COOR_4$ oder $CON.R_5.R_6$, worin bedeuten: $R_4$ gegebenenfalls substituiertes $C_1$-$C_{10}$ Alkyl oder $C_5$-$C_8$ Cycloalkyl und $R_5$ und $R_6$ unabhÄngig voneinander Wasserstoff, $C_1$-$C_{10}$ Alkyl oder $R_5$ und $R_6$ bilden zusammen mit dem N-Atom einen Pyrrolidin-, Piperidin-, Morpholin- oder Piperazinring;

$R_7$ gegebenenfalls substituiertes $C_1$-$C_{10}$ Alkyl oder $CO.R_{12}$, worin $R_{12}$ gegebenenfalls substituiertes $C_1$-$C_6$ Alkyl oder Phenyl darstellt, sowie die entsprechenden N-Isomeren und wobei der Benzorest A substituiert sein kann, und Mischungen dieser 1, 4-Diaminoanthrachinonver-bindungen.

Bedeutet $R_1$ und/oder $R_2$ einen gegebenenfalls substituierten $C_1$-$C_6$-Alkylrest, so handelt es sich um einen unverzweigten oder verzweigten Alkylrest wie z.B. um den Methyl-, Aethyl-, n- und iso-Propyl-, n-, sec.- oder tert.-Butyl-, den n- und iso-Pentyl- und den n- und iso-Hexylrest. Diese Alkylreste kÖnnen ein- oder mehrmals substituiert sein, beispielsweise durch OH, $C_1$-$C_4$ Alkoxy und $C_1$-$C_4$-Alkoxy substituiert durch OH.

Als derartige Reste kommen beispielsweise in Frage: Methoxymethyl, Aethoxymethyl, AethoxyÄthyl, Aethoxypropyl, n-Propoxymethyl, iso-Propoxymethyl, Butoxymethyl, ButoxyÄthyl, Butoxypropyl, Aethoxypentyl, Methoxybutyl, Aethoxypentyl und 2-HydroxyÄthoxypentyl.

Bedeutet $R_1$ und/oder $R_2$ einen gegebenenfalls substituierten $C_5$-$C_8$-Cycloalkylrest, so handelt es sich vor allem um den Cyclopentylund Cyclohexylrest; als Substituenten kommen vor allem $C_1$-$C_3$-Alkyl-gruppen, insbesondere die $CH_3$-Gruppe, in Frage.

Bedeutet $R_1$ und/oder $R_2$ einen gegebenenfalls substituierten Phenylrest, so kommen als Substituenten beispielsweise in Frage: $C_1$-$C_6$-Alkylgruppen (unverzweigt oder verzweigt), $C_1$-$C_6$-Alkoxygruppen (unverzweigt oder verzweigt), Halogen wie Fluor, Chlor oder Brom, $NO_2$, NHCO-Alkyl $C_1$-$C_6$, COO-Alkyl $C_1$-$C_4$ und COO-Alkyl ($C_1$-$C_4$)-OH.

In den bevorzugten 1, 4-Diaminoanthrachinonverbindungen bedeutet $R_1$ und $R_2$ je Wasserstoff.

Bedeutet $R_3$ einen $COOR_4$-Rest, so kommen als $R_4$-Reste die folgenden in Frage: $C_1$-$C_{10}$-Alkyl, sowohl unverzweigt als auch verzweigt, welches gegebenenfalls substituiert sein kann, beispielsweise durch OH Phenoxy, Alkoxy und Hydroxyalkoxy; bedeutet $R_4$ einen Cycloalkylrest mit 5-8 C-Atomen, so handelt es sich vor allem um den Cyclopentylund Cyclohexylrest.

Stellt $R_3$ einen $CONR_5.R_6$-Rest dar, so kann $R_5$ und $R_6$ u.a. auch einen Alkylrest mit 1-10 C-Atomen darstellen; dieser Alkylrest kann unverzweigt oder verzweigt sein.

In den bevorzugten 1, 4-Diaminoanthrachinonverbindungen bedeutet $R_3$ die CN-Gruppe.

Der Benzorest A kann ein- oder mehrmals substituiert sein; als Substituenten kommen z.B. in Frage: Halogen, wie Fluor, Chlor oder Brom, die OH-Gruppe, eine $C_1$-$C_4$-Alkoxygruppe (unverzweigt oder verzweigt) Alkoxygruppen kÖnnen noch substituiert sein, beispielsweise durch OH. Ferner kommen als Substituenten in Frage: eine Phenoxygruppe, gegebenenfalls substituiert durch beispielsweise $C_1$-$C_4$-Alkyl (unverzweigt oder verzweigt) oder Halogen (Fluor, Chlor und Brom); dann die $NO_2$ Gruppe, die $NH_2$-Gruppe, eine N-mono- oder N, N-dialkylierte Aminogruppe, wobei als Alkylgruppen solche mit 1 bis 4 Kohlenstoffatomen in Frage kommen und die NH-Phenylgruppe, welche gegebenenfalls im Phenylrest durch $C_1$-$C_4$ Alkyl, $C_1$-$C_4$ Alkoxy oder durch Halogen substiuiert sein kann.

In den bevorzugten 1, 4-Diaminoanthrachinonverbindungen ist der Benzorest A nicht substituiert.

Bedeutet $R_7$ eine $C_1$-$C_{10}$-Alkylgruppe, so kann diese unverzweigt oder verzweigt sein. Es handelt sich beispielsweise um folgende Gruppen: Methyl-, Aethyl-, n- und iso-Propyl, n-, sec.- und tert.-Butyl, nund iso-Octyl- und n- und iso-Nonyl.

Diese Alkylgruppen kÖnnen substituiert sein; als Substituenten für diese Alkylgruppen kommen beispielsweise in Frage: OH, $C_1$-$C_4$-Alkoxy, Phenoxy, 0-Acyl, 0-Acyl-Oxy, $N.R_8.R_9$ und $[N.R_8.R_9.R_{10}]^{\oplus}$ $An^{\ominus}$, wobei $R_8$, $R_9$ und $R_{10}$ unabhÄngig voneinander $C_1$-$C_4$-Alkyl, gegebenenfalls substituiert durch Phenyl und An $\ominus$ ein in kationischen Farbstoffen übliches Anion bedeuten. Als derartige Anionen kommen beispielsweise in Frage: organische wie anorganische Ionen, z.B. Halogen, wie Chlorid-, Bromid- oder Jodid-, Bortetrafluorid-, Rhodanid-, Sulfat-, Methylsulfat-, Aethylsulfat-, Aminosulfonat, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfo-nat-, Oxalat-, Maleinat-, Formiat-, Acetat-, Propionat-, Lactat-, Succinat-, Chloracetat-, Tartrat-, Methansulfonat- oder Benzoationen, oder komplexe Anionen wie das von Chlorzinkdoppelsalzen. Der $C_1$-$C_{10}$-Alkylrest $R_7$ kann aber auch substituiert sein durch Phenyl, welcher Phenylrest seinerseits noch substituiert sein kann, beispielsweise durch $C_1$-$C_4$-Alkyl, durch Halogen (Fluor, Chlor oder Brom) oder durch $NO_2$; es handelt sich beispielseise um den Benzylrest, um den Phen-Äthylrest, um den p-Chlorbenzylrest und p-Nitrobenzylrest. Schliesslich kann der Alkylrest $R_7$ noch substituiert sein durch die $-X-(CH_2)_n-R_{11}$-Gruppierung, worin X das Sauerstoff- oder Schwefelatom, die Zahlen 1-3 und $R_{11}$ einen Aryl-, vor allem Phenylrest darstellt, der gegebenenfalls noch durch beispielsweise OH substituiert sein kann, oder $R_{11}$ bedeutet einen heterocyclischen Ring, der gegebenenfalls über ein Sauerstoffatom an die $CH_2$-Gruppe gebunden ist. Als derartige Reste $-X-(CH_2)_n-R_{11}$ kommen beispielsweise in Frage: (2'-Phenoxy)-Äthoxypropyl,

(Furyl-2)-methoxypropyl, (Tetrahydrofuryl-2)-methoxypropyl, (3'-Phenyl-(propyloxypropyl, (Phenyl)-methoxypropyl, (2'-Pyridyl-3-oxy)-äthoxypropyl, (p-Chlorphenyl)-methoxypropyl, (p-Methoxyphenyl)-methoxypropyl,

(2'-Pyridyl-2)-äthoxypropyl,
(Pyridyl-4)-methoxypropyl,
(Thienyl-2)-methoxypropyl,
(Tetrahydrothienyl-2)-methoxypropyl,
(2'-Phenoxy)-äthoxybutyl,
(3'-Phenyl)-propyloxybutyl,
(p-Chlorphenyl)-methoxybutyl,
(p-Methoxyphenyl)-methoxybutyl,
(Phenyl)-methoxypentyl,
(Phenyl)-methylthiopropyl und
(2'-Phenyl)-äthylthiobutyl.

Bedeutet $R_7$ die $-CO.R_{12}$-Gruppe, so kommen als Substituenten im $C_1$-$C_6$-Alkylrest beispielsweise in Frage: unsubstituiertes Phenyl und Phenyl, welches substituiert ist beispielsweise durch $C_1$-$C_4$-Alkyl oder Halogen; es handelt sich bei der $-C0.R_{12}$-Gruppe beispielsweise um die Methylcarbonyl-, Aethylcarbonyl-, n-Propylcarbonyl-, Benzylcarbonylund p-Chlorbenzylcarbonylgruppe.

In den bevorzugten 1, 4-Diaminoanthrachinonverbindungen bedeutet $R_7$ entweder unsubstituiertes $C_1$-$C_4$-Alkyl oder durch Phenyl substituiertes $C_1$-$C_4$-Alkyl.

Die Erfindung bezieht sich desweitern auch auf die Isomeren der erfindungsgemÄssen 1, 4-Diaminoanthrachinonverbindungen der Formel I; als solche sind beispielsweise Verbindungen genannt, wo die Gruppe $R_7$ sich in 1-Stellung des Tetrazolkernes befindet. Schliesslich betrifft die Erfindung noch Mischungen der erfindungsgemÄssen 1, 4-Diaminoanthrachinonverbindungen untereinander. Derartige Mischungen setzen sich beispielsweise zusammen aus:

a) Isomeren 1, 4-Diaminoanthrachinonverbindungen, worin der Substituent $R_7$ sich einmal in 1-Stellung und einmal in 2-Stellung des Tetrazolringes befindet,

b) verschiedenen 1, 4-Diaminoanthrachinonverbindungen, worin $R_7$ nicht identisch ist, und

c) aus Mischungen der Komponenten a) und b).

Die neuen 1, 4-Diaminoanthrachinonverbindungen der Formel I erhÄlt man nach an sich bekannten Methoden. Erfindungsgemäss kommt man zu den Verbindungen der Formel I, indem man entweder:

a) eine Verbindung der Formel II

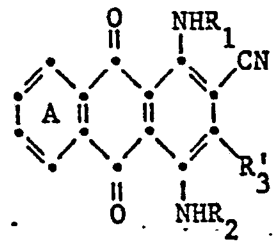

(II),

worin $R_1$ und $R_2$ die unter Formel I angegebene Bedeutung haben und $R_3'$ Wasserstoff oder CN bedeutet, mit ei-nem Azid in einem polaren tischen LÖsungsmittel, gegebenenfalls in Gegenwart eines Ammoniumsalzes, bei einer Temperatur von etwa 70 bis 130°C zu einer Tetrazolverbindung der Formel III

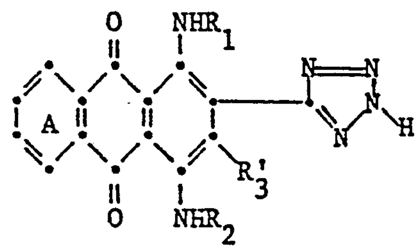

(III),

worin die Symbole $R_1$, $R_2$ und $R_3'$ die angegebene Bedeutung haben, umsetzt und diese Tetrazolverbindung anschliessend mit einer den Substituenten $R_7$ einführenden Verbindung alkyliert bzw. acyliert, oder

b) indem man in einem Eintopfverfahren, ausgehend von der Verbindung der Formel II, den Ringschluss zur Tetrazolgruppierung und die Alkylierung bzw. Acylierung nacheinander ohne Zwischenisolation der Tetrazolverbindung der Formel III durchführt. Für den Fall, dass $R_3'$ in der Formel II eine CN-Gruppe darstellt, ist es überraschend, dass in der Reaktionsfolge nur eine CN-Gruppe, und zwar diejenige, die am wenigsten sterisch gehindert ist umgesetzt wird. Ist die sterische Hinderung z.B. durch je eine Phenylgruppe anstelle von $R_1$ und $R_2$ gleichmÄssig verteilt, so wird trotzdem nur eine CN-Gruppe umgesetzt.

Nach beiden HerstellungsmÖglichkeiten erhÄlt man die 1, 4-Diamino-anthrachinonverbindungen der Formel 1, worin $R_3$ Wasserstoff oder CN bedeutet. Die CN-Gruppe kann gewünschtenfalls nach bekannter Art und Weise zur COOH-Gruppe verseift werden, welche z.B. über das CarbonsÄurehalogenid dann verestert oder zum CarbonsÄureamid umgesetzt werden kann, wobei man so die Verbindungen der Formel I erhÄlt, worin $R_3$ die $COOR_4$ bzw. $CONR_5$-$R_6$-Gruppe darstellt.

Für den Fall, dass der Substituent $R_7$ eine freie OH-Gruppe enthÄlt, so kann diese anschliessend noch acyliert werden.

Zur Durchführung dieser genannten Reaktionen a) und b) werden als Azide Alkaliazide wie Kaliumazid und vor allem Natriumazid oder dann auch Ammoniumazid verwendet. - Als Ammoniumsalze kommen beispielsweise Ammoniumsulfat, Ammoniumcarbonat, Ammoniumbicarbonat und vor allem Ammoniumchlorid in Frage. Als polare aprotische LÖsungsmittel kommen beispielsweise in Betracht: stickstoffhaltige Verbindungen, wie Formamid, Dimethylformamid, Dimethylacetamid, N, N, N', N'-Tetramethylharnstoff, N-Methylpyrrolidon, 1, 5-Dimethylpyrrolidon und Pyridin; schwefelhaltige Verbindungen, wie Sulfolan (Tetramethylensulfon) und Sulfolen (2, 3- und 2, 5-Dihydrothiophen-S-dioxyd) und deren in α- und/oder β-Stellung insbesondere durch Alkyl- oder Hydroxyalkylgruppen substituierte Derivate und Dimethylsulfoxyd; sowie phosphorhaltige Verbindungen, wie HexamethylphosphorsÄuretriamid und Bis-(dimethylamido)-methanphosphat.

Das bevorzugte LÖsungsmittel ist Dimethylformamid. Die Reaktionstemperatur liegt zwischen 70 und 130°C, insbesondere bei 80°C.

Führt man die Herstellung der Verbindungen der Formel I mittels dem Eintopfverfahren nach der Variante b) durch, so geht man im Einzelnen so vor, dass man zu der Verbindung der Formel II das Azid und LÖsungsmittel

und gegebenenfalls das Ammonsalz gibt und solange miteinander reagieren lÄsst, bis im Dünnschichtchromatogramm kein Ausgangsmaterial mehr vorhanden ist; anschliessend gibt man dann die den Rest $R_7$ einführende Verbindung zu. Bei der $R_7$ einführenden Verbindung handelt es sich entweder um ein Alkylierungsmittel oder um ein Acylierungsmittel.

Im Falle eines Alkylierungsmittels geht man derart vor, dass man die $R_7$ entsprechenden Halogenide, vor allem Chloride, in Gegenwart einer Base wie Alkali (Na, K, Li oder $NH_4$)carbonat, Alkalibicarbonat, Alkaliacetat oder auch Alkalihydroxyd in einem der genannten polaren aprotischen LÖsungsmittel, vor allem Dimethylformamid, bei einer Temperatur von etwa 70 bis 130°C, vorzugsweise 100°C, mit den Verbindungen der Formel III (Variante a)) umsetzt, oder diese Verbindungen im Eintopfverfahren (Variante b)) der ReaktionslÖsung zugibt. Diese Alkylierung kann anstelle der $R_7$ entsprechenden Halogenide auch mit den $R_7$ entsprechenden Epoxyden durchgeführt werden. In diesem Falle betrÄgt die Reaktionstemperatur bei im übrigen gleicher Arbeitsweise 120° bis 135°C, vorzugsweise 130°C.

Im Falle eines Acylierungsmittels, d.h. für den Fall, dass $R_7$ die $-CO-R_{12}$ Gruppe bedeutet, geht man bekannterveise so vor, dass man die entsprechenden Anhydride oder SÄurehalogenide, vor allem SÄurechloride, mit den Verbindungen der Formel III (Variante a)) umsetzt, oder diese Verbindungen im Eintopfverfahren (Variante b)) der ReaktionslÖsung zugibt. Auch hier arbeitet man in Gegenwart einer Base und eines LÖsungsmittels gemÄss der Alkylierungsreaktion. Die Reaktionstemperatur betrÄgt in diesem Falle 20 bis 130°C, vorzugsweise 50°C.

Die Zeit wÄhrend welcher die Reaktion durchgeführt wird, liegt im Falle der Isolierung der Tetrazolverbindung der Formel III bei etwa 12 bis 18, insbesondere 15 Stunden. Führt man die Reaktion als Eintopfverfahren ohne Isolierung der Tetrazolverbindung der Formel III durch, so betrÄgt die Reaktionszeit ca. 4 bis 7, insbesondere 5 Stunden.

Die Ausgangsverbindungen der Formel II sind teilweise bekannt, z.B. aus der US-A 1 938 029, der US-A 2,496,414 und der EP-A 23645.

Die Verbindungen der Formel III sind neu. Dabei kann sich das H-Atom im Tetrazolring sowohl in 1-Stellung als auch in 2-Stellung befinden oder es kann auch ein Gemisch von Verbindungen der Formel III vorliegen worin das H-Atom sich einmal in 1-Stellung und das anderemal in 2-Stel-lung befindet.

Gegenstand der Erfindung ist auch ein Verfahren zur Herstellung der Zwischenprodukte der Formel

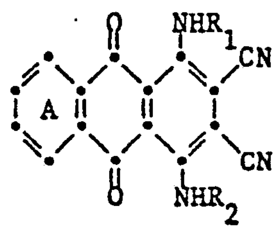

, (IIa)

indem man eine Verbindung der Formel IV

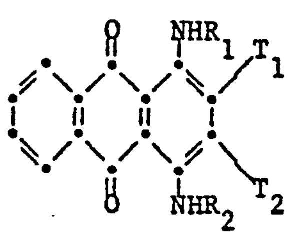

(IV),

worin eines von $R_1$ und $R_2$ Wasserstoff bedeutet und das andere einen gegebenenfalls substituierten $C_1$-$C_6$-Alkylrest, einen gegebenenfalls substituierten $C_5$-$C_8$-Cycloalkylrest oder einen gegebenenfalls substituierten Phenylrest oder worin $R_1$ und $R_2$ unabhÄngig voneinander einen gegebenenfalls substituierten $C_1$-$C_6$-Alkylrest, einen gegebenenfalls substituierten $C_5$-$C_8$-Cycloalkylrest oder einen gegebenenfalls substituierten Phenylrest

bedeuten; $T_1$ und $T_2$ unabhÄngig voneinander Wasserstoff, Halogen, SO H, Phenoxy, COOH oder COO-Alkyl($C_1$-$C_4$) bedeuten oder eines von den beiden T bedeutet CN und das andere T hat eine der angegebenen Bedeutung, mit einem Alkali (Na, K, Li, $NH_4$)cyanid gegebenenfalls in Gegenwart eines Ammonsalzes (z.B. Ammoniumchlorid, Ammoniumsulfat, Ammoniumcarbonat, Ammoniumbicarbonat) in Dimethylsulfoxyd bei einer Temperatur von etwa 80° bis 120°C, vorzugsweise 100°C, gegebenenfalls in Anwesenheit eines Oxydationsmittels umsetzt. Man erhÄlt so die der Formel II entsprechenden 2, 3-Dicyanverbindungen. Geeignete Oxidationsmittel sind Luft und Sauerstoff, ferner anorganische Oxidationsmittel, wie Nitrate, Mangandioxid, Natriumchlorit, Kaliumbromat, Ammoniumpersulfat und Kaliumpersulfat, Wasserstoffperoxid und seine Additionsverbindungen, wie Natriumpercarbonat, Natriumperborat und Natriumpyrophosphat und auch organische Oxidationsmittel wie zum Beispiel PeressigsÄure, die Additionsverbindung von Harnstoff und Wasserstoffperoxid, Nitrobenzol, m-NitrobenzoesÄure und deren Salze und m-NitrobenzolsulfonsÄure und deren Salze. Bevorzugt ist die Verwendung von Nitrobenzol, m-Nitro-benzolsulfonsÄure und ihren Salzen, sowie Sauerstoff, vorteilhaft in Form von Luftsauerstoff, gegebenenfalls in Gegenwart von katalytisch wirkenden Verbindungen, wie Ammoniummolybdat, Ammoniumvanadat, oder Kupferverbindungen, z.B. Kupferacetat.

Die FR-A-2 313 357 betrifft ein Verfahren zur Herstellung von 1, 4-Diamino-anthrachinon-2, 3-dinitril durch Umsetzung von gegebenenfalls in 2- und/ oder 3-Stellung halogensubstituiertem 1, 4-Diaminoanthrachinon mit Cyaniden in Gegenwart von verschiedenen polaren aprotischen LÖsungsmitteln.

Es ist ausserordentlich überraschend, dass die Herstellung von N-substituierten Anthrachinonverbindungen der Formel IIa in dem erfindungsgemÄss zu verwendenden LÖsungsmittel Dimethylsulfoxyd so glatt verlÄuft, da in anderen technisch gebrÄuchlichen LÖsungsmitteln, wie z.B. .Wasser Dimethylformamid, N-Methylpyrrolidon, Sulfolan, Pyridin, Aethylenglykol, DiÄthylenglykol, Dimethylacetanid und Tetramethylharnstoff, die Ausbeutenbezüglich der Dicyanverbindung unter vergleichbaren Reaktionsbedingungen wesentlich geringer sind, da die Monocyanverbindung als Hauptbestandteil gebildet wird. Manche der Zwischenprodukte der Formel IIa lassen sich in den genannten gebrÄuchlichen LÖsungsmitteln überhaupt nicht herstellen, da ausschliesslich das Monocyanoprodukt entsteht.

Die Verbindungen der Formel IV sind bekannt.

Ein weiterer Gegenstand der vorliegenden Erfindung sind die neuen Zwischenprodukte der Formel VI:

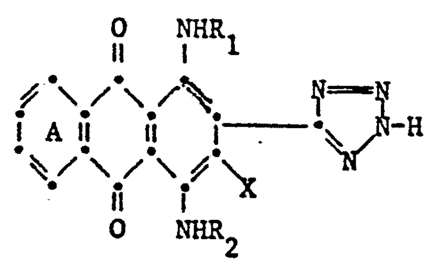

(VI),

worin $R_1$ und $R_2$ die unter Formel I angegebene Bedeutung haben, wobei der Phenylrest B gegebenenfalls analog substituiert sein kann wie der Phenylrest gemÄss dem Symbol $R_1$ und worin X die CN, COOH, COO-Alkyl ($C_1$-$C_4$) oder $CONR_5$-$R_6$ Gruppe darstellt.

Die Herstellung dieser neuen Zwischenprodukte VI erfolgt wie beschrieben aus der Verbindungen der Formel IV.

Die neuen Zwischenprodukte der Formel VI stellen als solche Farbstoffe gegebenenfalls als Natriumsalz) dar, die zum FÄrben und Bedrucken von Polyamidmaterialien und Wolle verwendet werden kÖnnen.

Verwendung finden die neuen 1, 4-Diaminoanthrachinonverbindungen der Formel I als Farbstoffe zum FÄrben und Bedrucken von vor allem Textilmaterialien. Es handelt sich bei den neuen 1, 4-Diaminoanthrachinon-verbindungen der Formel I sowohl um Dispersionsfarbstoffe als auch um kationische Farbstoffe, für den Fall, wenn $R_7$ eine $C_1$-$C_{10}$-Alkyl-gruppe darstellt, die durch eine quaternÄre Aminogruppe $(N.R_{10}.R_{11}.R_{12})^{\oplus}$ substituiert ist.

Dienen die neuen 1, 4-Diaminoanthrachinonverbindungen als Dispersionsfarbstoffe, so werden diese Farbstoffe vor ihrer Verwendung vorteilhaft in FarbstoffprÄparate übergeführt. Hierzu kann man sie zerkleinern, so dass ihre TeilchengrÖsse im Mittel zwischen 0,01 und 10 Mikron betrÄgt. Das Zerkleinern kann in Gegenwart von Dispergiermitteln erfolgen. Beispielsweise wird der getrocknete Farbstoff mit einem Dispergiermittel gemahlen oder in Pastenform mit einem Dispergiermittel geknetet und hierauf im Vakuum oder durch ZerstÄuben getrocknet. Mit den so erhaltenen PrÄparaten kann man, nach Zugabe von Wasser, in langer Flotte (FlottenverhÄltnis grÖsser als 1:5) oder kurzer Flotte (FlottenverhÄltnis 1:1 bis 1:5) fÄrben, klotzen oder bedrucken.

Die neuen 1, 4-Diaminoanthrachinonverbindungen ziehen aus wÄssriger Suspension ausgezeichnet auf

FormkÖrper aus vollsynthetischen oder halbsynthetischen hochmolekularen Stoffen auf. Besonders geeignet sind sie zum FÄrben, Klotzen oder bedrucken von Fasern, FÄden oder Vliesen, Geweben oder Gewirken aus linearen, aromatischen Polyestern sowie aus Cellulose-2 1/2-acetat und Cellulosetriacetat. Auch synthetische Polyamide, Polyolefine, Acrylnitrilpolymerisationsprodukte und Polyvinylverbindungen lassen sich mit ihnen fÄrben und bedrucken. Besonders wertvolle FÄrbungen werden auf linearen, aromatischen Polyestern erhalten. Diese sind im allgemeinen Polykondensationsprodukte aus TerephthalsÄure und Glykolen, besonders Aethylenglykol, oder Polykondensationsprodukte aus TerephthalsÄure und 1, 4-bis-(hydroxymethyl)-hexahydrobenzol. Eine weitere Verwendung liegt in der MassefÄrbung von Polyestermaterialien.

Man fÄrbt die Polyesterfasern nach an sich bekannten Verfahren in Gegenwart von Carriern bei Temperaturen zwischen etwa 80 und 125°C oder in Abwesenheit von Carriern unter Druck bei etwa 100 bis 140°C nach dem Ausziehverfahren. Ferner kann man diese Fasern mit den wÄssrigen Dispersionen Klotzen oder Bedrucken und die erhaltene ImprÄgnierung bei etwa 140° vis 230°C fixieren, z.B. mit Hilfe von Wasserdampf, Kontakthitze oder heisser Luft. Cellulose-2-L/2-acetat fÄrbt man vorzugsweise zwischen ungefÄhr 65 bis 85 °C und Cellulosetriacetat bei Temperaturen bis zu 115°C.

Meist gibt man die üblichen Dispergiermittel zu, die vorzugsweise anionisch oder nichtionogen sind und auch im Gemisch miteinander verwendet werden kÖnnen.

Bekannte anionische Dispergiermittel, die für das Verfahren in Betracht kommen, sind beispielsweise Kondensationsprodukte aus NaphthalinsulfonsÄuren und Formaldehyd, insbesondere Dinaphthylmethandisulfonate, Ester von sulfonierter bernsteinsÄure, TürkischrotÖl, und Alkalisalze von SchwefelsÄureestern der Fettalkohole, z.B. Natriumlaurylsulfat oder Natriumcetylsulfat, Sulfitcelluloseablauge, bzw. deren Alkalisalze, Seifen oder Alkalisulfate von Monoglyzeriden von FettsÄuren. Beispiele bekannter und besonders geeigneter nichtionogener Dispergiermittel sind Anlagerungsprodukte von etwa 3 bis 40 Mol Aethylenoxyd an Alkylphenole, Fettalkohole oder Fettamine und deren neutrale SchwefelsÄureester.

Beim Klotzen und Bedrucken wird man die üblichen Verdickungsmittel verwenden, z.B. modifizierte oder nichtmodifizierte natürliche Produkte, beispielsweise Alginate, Britischgummi, Gummi arabicum, Kristallgummi, Johannisbrotkernmehl, Tragant, Carboxymethylcellulose, HydroxyÄthylcellulose, StÄrke oder synthetische Produkte, beispielsweise Polyacrylamide oder Polyvinylalkohole.

Eine weitere Verwndung der neuen 1, 4-Diaminoanthranthrachinonverbindungen der Formel I liegt in Flüssigekristalle enthaltenden elektroopischen Anzeigen, sowie in Flüssigkristallmischungen, enthaltend derartige Farbstoffe. [illegible]delt es sich bei den neuen 1, 4-Diaminoanthrachinonverbindungen der Formel I um kationische Verbindungen, so finden diese Verwendung als Farbstoffe zum FÄrben und unter Zusatz von Binde- und LÖsungsmitteln zum Bedrucken von mit kationischen Farbstoffen anfÄrbbaren Materialien, insbesondere Textilmaterialien, die z.B. aus Homo- oder Mischpolymerisaten des Acrylnitrils bestehen, oder synthetische Polyamide oder Polyester, welche durch saure Gruppen modifiziert sind. Des weiteren dienen die neuen kationischen Farbstoffe auch zum FÄrben von Nasskabel, Kunststoffmassen, Leder und Papier sowie zum FÄrben von Polyacrylnitril in der Spinnmasse. Man fÄrbt vorzugsweise aus wÄsserigem neutralem oder saurem Medium nach dem Ausziehverfahren, gegebenenfalls unter Druck oder nach dem Kontinueverfahren. Das Textilmaterial kann dabei in verschiedenartigster Form vorliegen, beispielsweise als Faser, Faden, Gewebe, Gewirke, Stückware und Fertigware, wie Hemden, Pullover.

Die mit den neuen Dispersionsfarbstoffen und kationischen Farbstoffen erhaltenen AusfÄrbungen auf Textilmaterial weisen eine neutrale bis grünstichige Blaunuance auf; es handelt sich dabei um farbstarke AusfÄrbungen von hoher Brillanz, die gute Allgemeinechtheiten aufweisen, vor allem sehr nassecht, sublimierecht und lichtecht sind und einen guten Aufbau auf Textilmaterial besitzen; ferner sind sie sÄurebestÄndig.

Die folgenden Beispiele veranschaulichen die Erfindung, ohne sie darauf zu limitieren; Temperaturen sind in Grad Celsius angegeben; Teile (T) bedeuten, sofern nicht anderes angegeben ist, Gewichtsteile.

Beispiel 1: 29 T 1, 4-Diamino-2,3-dicyananthrachinon, 7,2 T Natriumazid und 5,9 T Ammoniumchlorid werden in 300 T Dimethylformamid 15 Stunden bei 80° gerührt. Das Reaktionsgemisch wird abgekühlt, mit 300 T Wasser verdünnt und mit SalzsÄure angesÄuert. Das ausgefallene Reaktionsprodukt der Formel

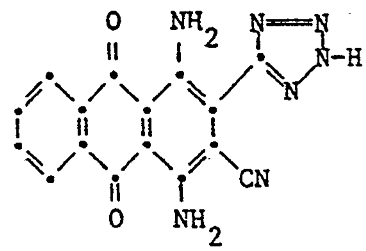

wird abgenutscht, mit Wasser neutral gewaschen und getrocknet.

3,3 T des so erhaltenen Produktes werden mit 1,2 T Natriumcarbonat in 30 T Dimethylformamid gelÖst und bei 100° mit 1,5 T Dimethylsulfat versetzt. Der auskristallisierte Farbstoff der Formel

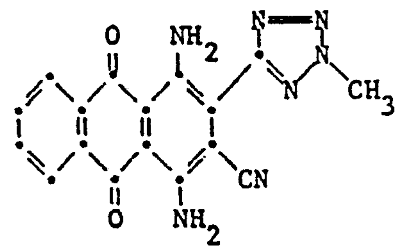

wird bei Raumtemperatur abgenutscht, mit Wasser gewaschen und getrocknet.

Der Farbstoff eignet sich zum FÄrben von Polyester, wobei brillante, klare BlaufÄrbungen mit hervorragenden Echtheiten und hohen Farbausbeuten erhalten werden.

Ersetzt man im obigen Beispiel die 1,5 T Dimethylsulfat durch Äquivalente Teile der in der Tabelle 1, Kol. 2, angegebenen Alkylierungsmittel, so erhÄlt man unter den gleichen Reaktionsbedingungen Ähnliche Farbstoffe (Kolonne 3), die auf Polyestermaterialien gleich gute Eigenschaften aufweisen.

**Tabelle 1**

| 1 | 2 | 3 | 4 |
|---|---|---|---|
| Bsp. Nr. | Alkylierungsmittel | 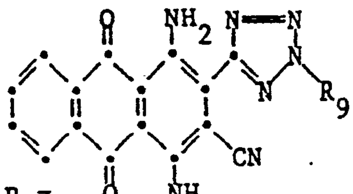 $R_9$= | Nuance auf Polyester |
| 2 | Diäthylsulfat | $-C_2H_5$ | blau |
| 3 | Benzylchlorid | 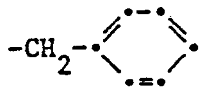 | blau |
| 4 | n-Propylchlorid | $-CH_2CH_2CH_3$ | blau |
| 5 | Isopropylchlorid | 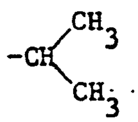 | blau |
| 6 | n-Butylchlorid | $-CH_2CH_2CH_2CH_3$ | blau |
| 7 | sec.-Butylchlorid | 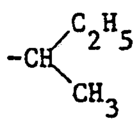 | blau |
| 8 | 50% Dimethylsulfat<br>50% Diäthylsulfat | $-CH_3$ 50%<br>$-C_2H_5$ 50% | blau |
| 9 | 50% Dimethylsulfat<br>50% Benzylchlorid | $-CH_3$ 50%<br>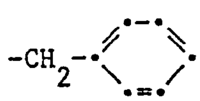 50% | blau |
| 10 | 50% Dimethylsulfat<br>50% n-Butylchlorid | $-CH_3$ 50%<br>$-CH_2CH_2CH_2CH_3$ 50% | blau |
| 11 | 50% Diäthylsulfat<br>50% n-Butylchlorid | $-CH_2CH_3$ 50%<br>$-CH_2CH_2CH_2CH_3$ 50% | blau |

**Tabelle 1** (Fortsetzung)

| 1 | 2 | 3 | 4 |
|---|---|---|---|
| Bsp. Nr. | Alkylierungsmittel | 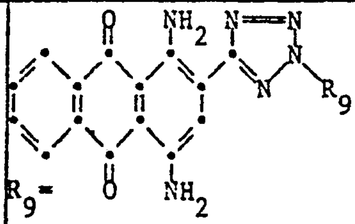 $R_9$= | Nuance auf Polyester |
| 12 | 50% Diäthylsulfat<br>50% Benzylchlorid | $-CH_2CH_3$ 50%<br>$-CH_2-$ 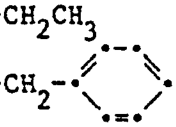 50% | blau |
| 13 | 50% n-Butylchlorid<br>50% Benzylchlorid | $-CH_2CH_2CH_2CH_3$ 50%<br>$-CH_2-$ 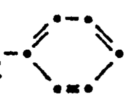 50% | blau |

**Beispiel 14:** 29 T 1, 4-Diamino-2, 3-dicyananthrachinon, 7,2 T Natriumazid und 5,9 T Ammoniumchlorid werden in 300 T Dimethylformamid 15 Stunden bei 80° gerührt. Ohne Isolierung des Produkts der Formel

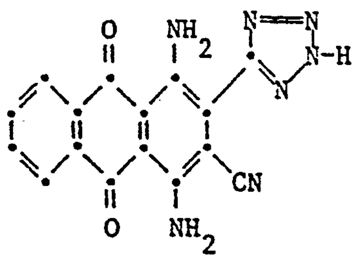

wird das Reaktionsgemisch auf 100° geheizt und mit 12 T Natriumcarbonat und 15 T Dimethylsulfat versetzt. Man rührt noch 1 Stunde bei 100°, kühlt ab und verdünnt mit 300 T Wasser. Ein Gemisch von ca. 90 T des Farbstoffes der Formel

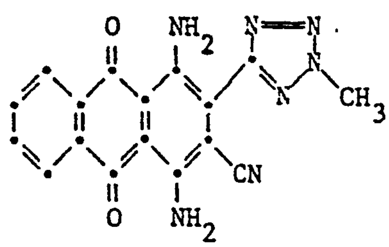

und ca. 10 T des Farbstoffes der Formel

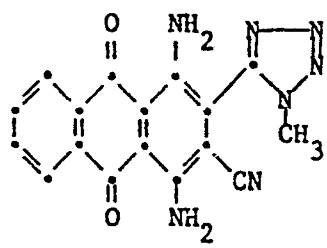

fÄllt aus und wird durch Filtration isoliert. Das Gemisch kann zum FÄrben von Polyester verwendet werden, wobei klare BlaufÄrbungen mit guten Echtheiten und gutem Ausziehgrad erhalten werden.

Ersetzt man im obigen Beispiel die 15 T Dimethylsulfat durch Äquivalente Teile eines Alkylierungsmittels der Tabelle 1, Kolonne 2, so erhÄlt man unter den gleichen Reaktionsbedingungen Farbstoffgemische mit gleich guten Eigenschaften.

**Beispiel 15:** 3,3 T des Produktes der Formel

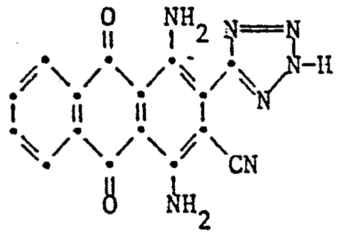

erhalten gemÄss Beispiel 1, werden in 30 T Dimethylformamid bei 80° gelÖst und mit 1,1 T Propylenoxyd versetzt. Bei Raumtemperatur fÄllt das Produkt der Formel

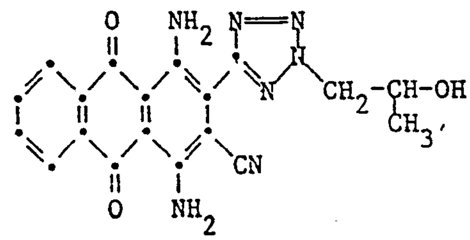

aus. Es eignet sich zum FÄrben von Polyester in reinen blauen TÖnen.

Eine wesentliche Steigerung des ZiehvermÖgens des obigen Farbstoffs auf Polyester erzielt man, wenn man diesen Farbstoff in an sich bekannter Weise mit EssigsÄureanhydrid acyliert. Der acetylierte Farbstoff der Formel

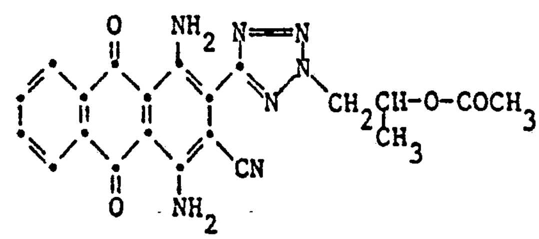

zieht aus seiner feinverteilten wÄsserigen Dispersion auf Polyester in reinen blauen TÖnen von ausgezeichneter Nass-, Reib- und Lichtechtheit.

Sehr Ähnliche blaue FÄrbungen erhÄlt man mit Farbstoffen, die erhalten werden beim Ersatz des Propylenoxyds durch Ethylenoxyd oder Butylenoxyd oder beim Ersatz des EssigsÄureanhydrids durch PropionsÄureanhydrid bzw. durch ein Gemisch der beiden Anhydride und ebenso, wenn man das

EssigsÄureanhydrid durch ChloressigsÄureanhydrid bzw. durch ChlorameisensÄureÄthylester bzw. ChlorthioameisensÄure-S-Äthylester, bzw. durch Methansulfochlorid oder durch p-Toluolsulfochlorid ersetzt. Aehnliche Farbstoffe werden erhalten, wenn man die beiden AbÄnderungsmassnahmen kombiniert.

**Beispiel 16:**

Man verfÄhrt wie im Beispiel 1 angegeben, verwendet jedoch anstelle von 23 T 1, 4-Diamino-2, 3-dicyananthrachinon die Äquivalente Menge der in der folgenden Tabelle 2, Kolonne 2, angegebenen Cyanverbindungen, so erhÄlt man die Tetrazol-Zwischenprodukte der Kol. 3, die gemÄss dem Verfahren der Beispiele 1-15 mit den in Kolonne 4 angegebenen Alkylierungsmitteln alkyliert werden, wobei man die Farbstoffe der Kolonne 5 erhÄlt. In Kolonne 6 ist die Nuance auf Polyester (PES)material angegeben.

Tabelle 2

| 1 | 2 | 3 | 4 | 5 | 6 |
|---|---|---|---|---|---|
| Bsp. | Cyanverbindungen | Tetrazol-Zwischenprodukte | Alkylierungsmittel | Farbstoffe | Nuance auf PES |
| 17 | 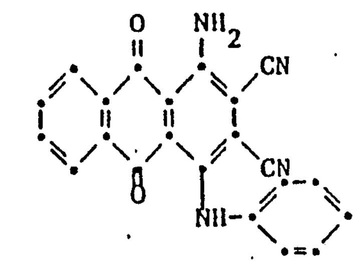 | 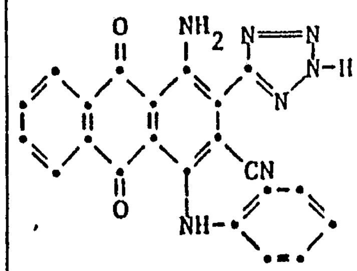 | Dimethylsulfat | 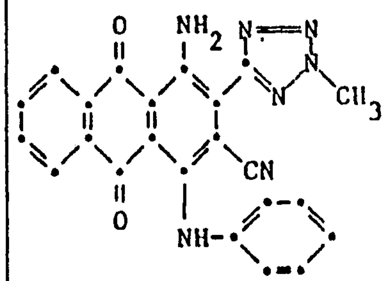 | grün |
| 18 | do. | do. | Diäthylsulfat | 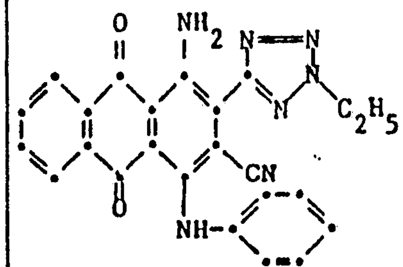 | grün |
| 19 | 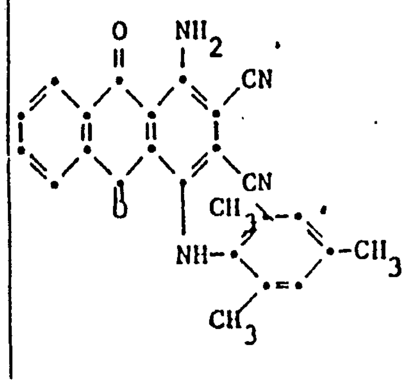 | 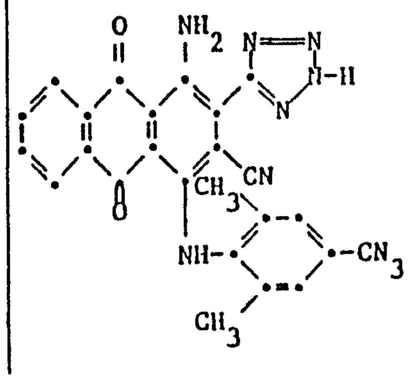 | Dimethylsulfat | 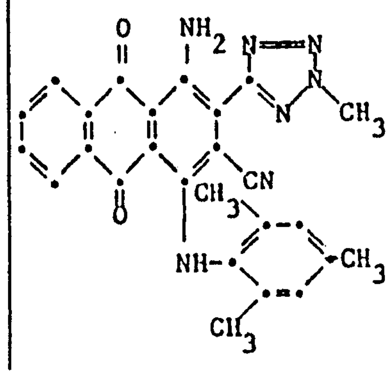 | grünblau |

**Tabelle 2** (Fortsetzung)

| 1 | 2 | 3 | 4 | 5 | 6 |
|---|---|---|---|---|---|
| Bsp. | Cyanverbindungen | Tetrazol-Zwischenprodukte | Alkylierungsmittel | Farbstoffe | Nuance auf PES |
| 20 | 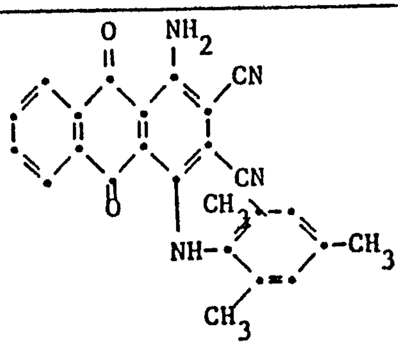 | 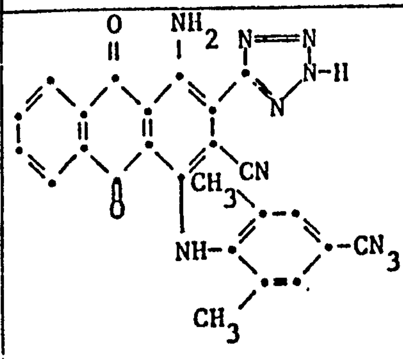 | Diäthylsulfat | 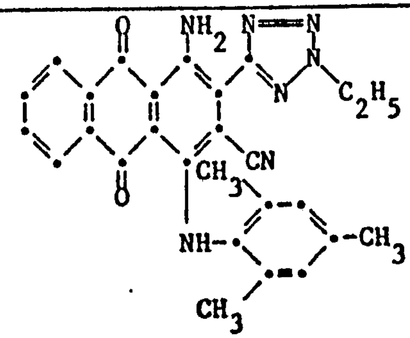 | grünblau |
| 21 | 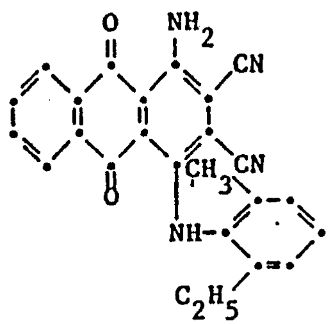 | 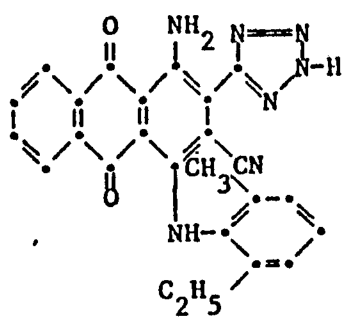 | Dimethylsulfat | 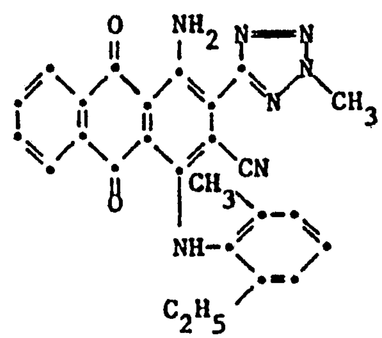 | grünblau |
| 22 | do | do. | Diäthylsulfat | 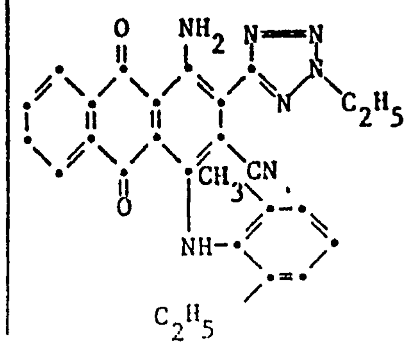 | grünblau |

| 1 | 2 | 3 | 4 | 5 | 6 |
|---|---|---|---|---|---|
| Bsp. | Cyanverbindungen | Tetrazol-Zwischenprodukte | Alkylierungsmittel | Farbstoffe | Nuance auf PES |
| 23 | 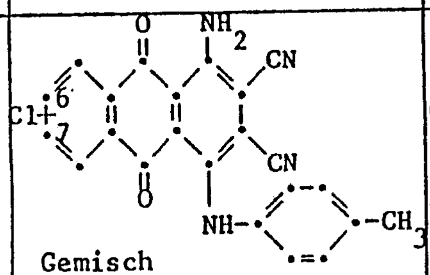 Gemisch 6/7 1:1 | 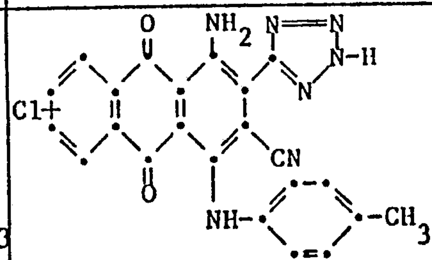 | Dimethylsulfat | 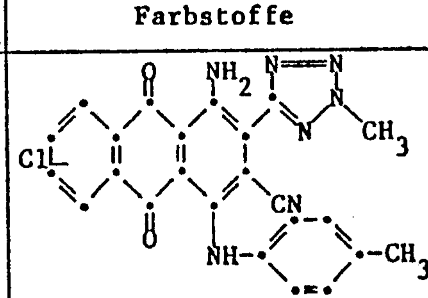 | grün |
| 24 | do. | do. | Diäthylsulfat | 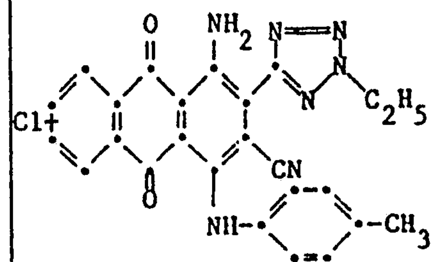 | grün |
| 25 | 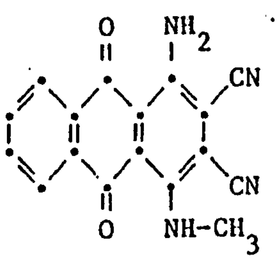 | 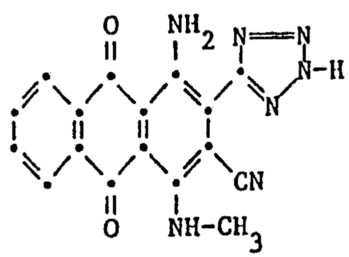 | Dimethylsulfat | 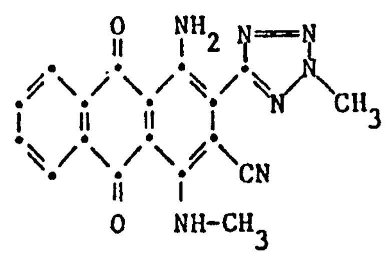 | grünblau |

**Tabelle 2** (Fortsetzung)

| 1 | 2 | 3 | 4 | 5 | 6 |
|---|---|---|---|---|---|
| Bsp. | Cyanverbindungen | Tetrazol-Zwischenprodukte | Alkylierungsmittel | Farbstoffe | Nuance auf PES |
| 26 | 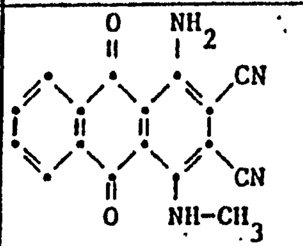 | 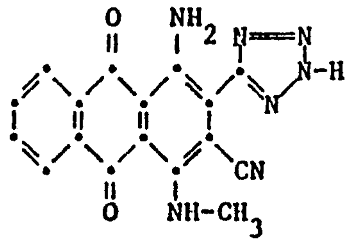 | Diäthylsulfat | 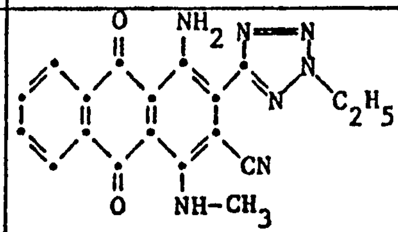 | grünblau |
| 27 | 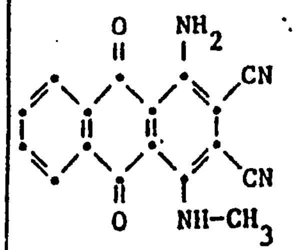 | 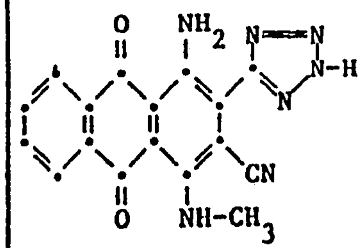 | Benzylchlorid | 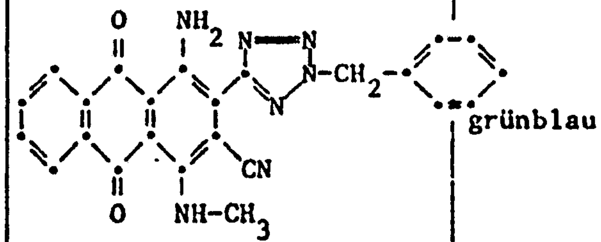 | grünblau |
| 28 | 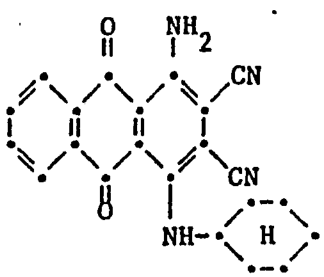 | 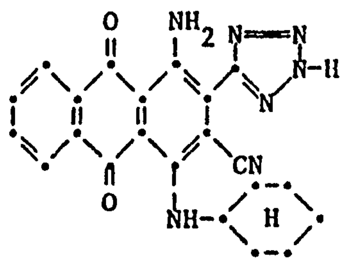 | Dimethylsulfat | 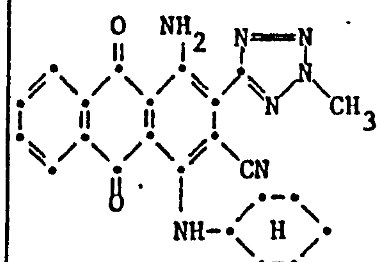 | grünblau |

| 1 | 2 | 3 | 4 | 5 | 6 |
|---|---|---|---|---|---|
| Bsp. | Cyanverbindungen | Tetrazol-Zwischenprodukte | Alkylierungsmittel | Farbstoffe | Nuance auf PES |
| 29 | 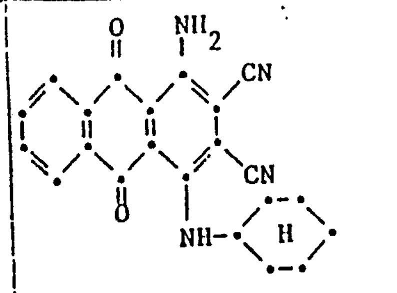 | 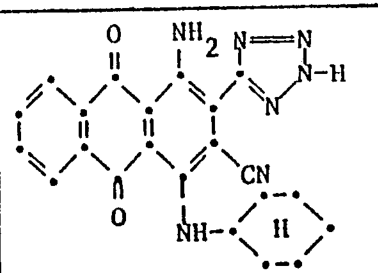 | Diäthylsulfat | 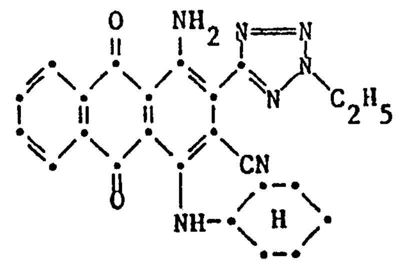 | grünblau |
| 30 | 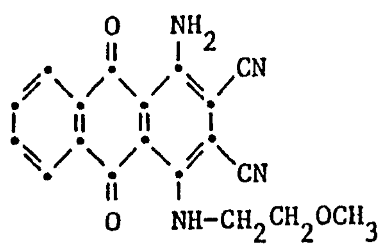 | 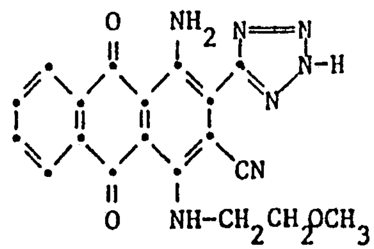 | Dimethylsulfat | 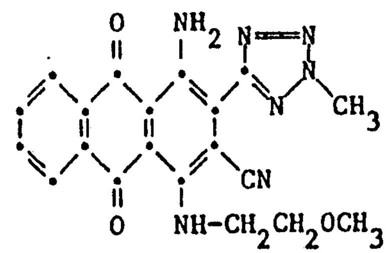 | grünblau |
| 31 | 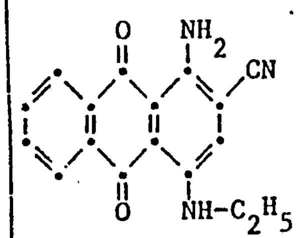 | 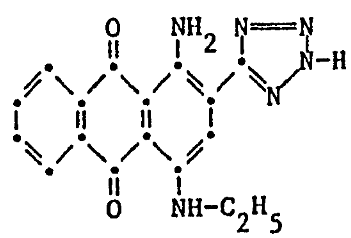 | Dimethylsulfat | 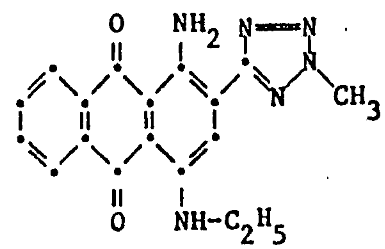 | blau |

Tabelle 2 (Fortsetzung)

| 1 | 2 | 3 | 4 | 5 | 6 |
|---|---|---|---|---|---|
| Bsp. | Cyanverbindungen | Tetrazol-Zwischenprodukte | Alkylierungsmittel | Farbstoffe | Nuance auf PES |
| 32 | 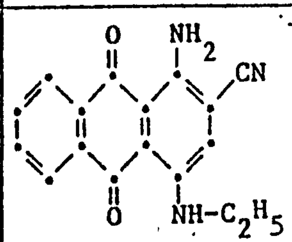 | 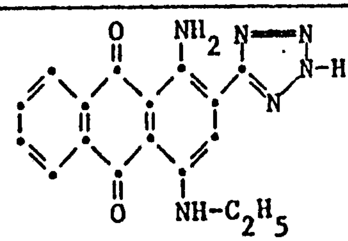 | Diäthylsulfat | 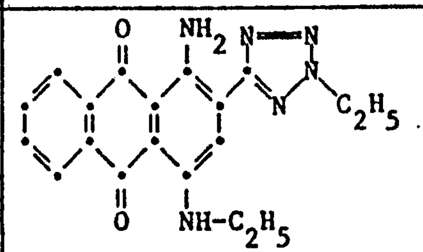 | blau |
| 33 | do. | do. | n-Butylchlorid | 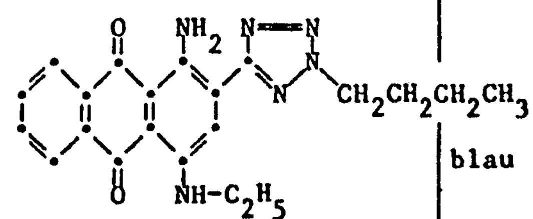 | blau |
| 34 | 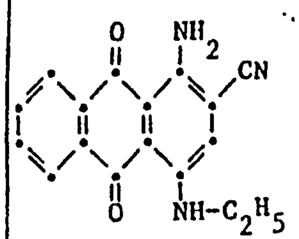 | 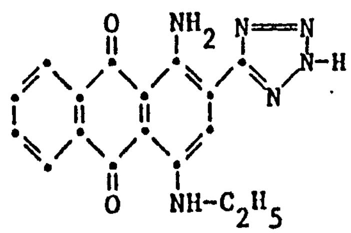 | Benzylchlorid | 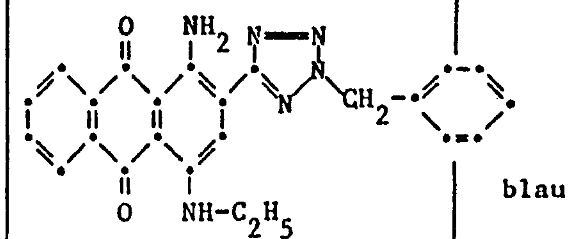 | blau |

| 1 | 2 | 3 | 4 | 5 | 6 |
|---|---|---|---|---|---|
| Bsp. | Cyanverbindungen | Tetrazol-Zwischenprodukte | Alkylierungsmittel | Farbstoffe | Nuance auf PES |
| 35 | 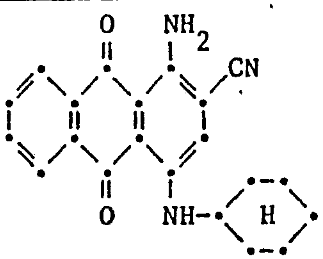 | 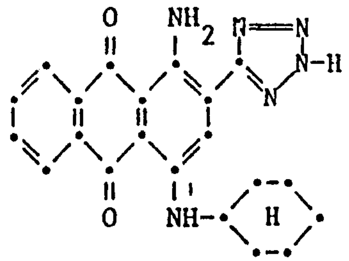 | Dimethylsulfat | 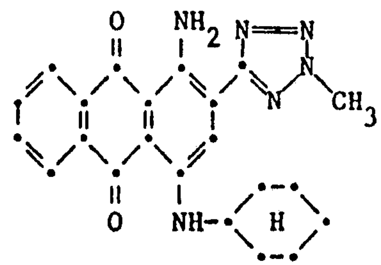 | blau |
| 36 | 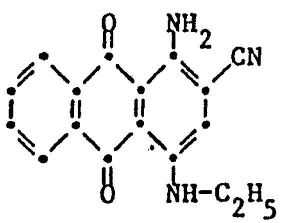 | 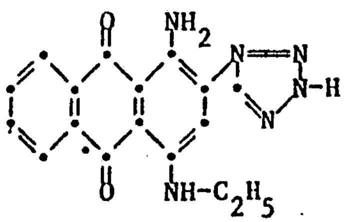 | Dimethylsulfat Diäthylsulfat 50:50 | 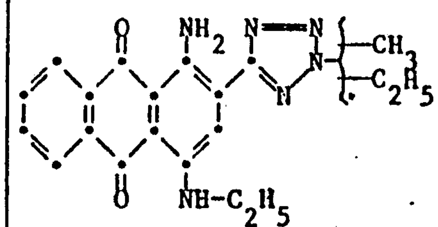 50% 50% | blau |
| 37 | do. | do. | Dimethylsulfat n-Butylchlorid 50:50 | 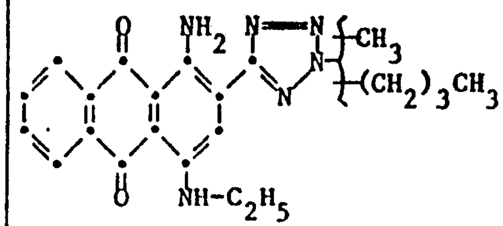 50% 50% | blau |

**Tabelle 2** (Fortsetzung)

| 1 | 2 | 3 | 4 | 5 | 6 |
|---|---|---|---|---|---|
| Bsp. | Cyanverbindungen | Tetrazol-Zwischenprodukte | Alkylierungsmittel | Farbstoffe | Nuance auf PES |
| 38 | 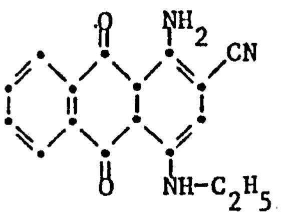 | 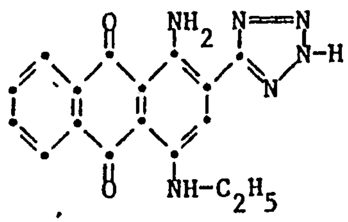 | Dimethyl-sulfat Benzyl-chlorid 50:50 | 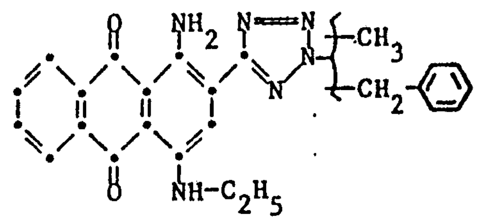 50% 50% | blau |
| 39 | do. | do. | Diäthyl-sulfat n-Butyl-chlorid 50:50 | 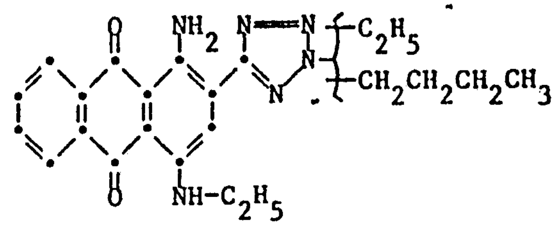 50% 50% | blau |
| 40 | do. | do. | Diäthyl-sulfat Benzyl-chlorid 50:50 | 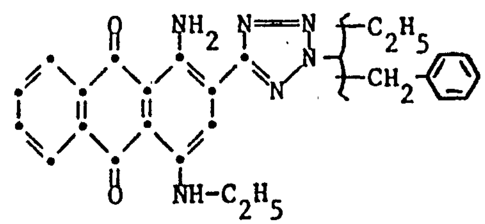 50% 50% | blau |
| 41 | do. | do. | n-Butyl-chlorid Benzyl-chlorid 50:50 | 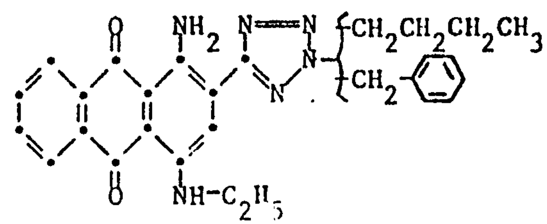 50% 50% | blau |

| 1 | 2 | 3 | 4 | 5 | 6 |
| --- | --- | --- | --- | --- | --- |
| Bsp. | Cyanverbindungen | Tetrazol-Zwischenprodukte | Alkylierungsmittel | Farbstoffe | Nuance auf PES |
| 42 | 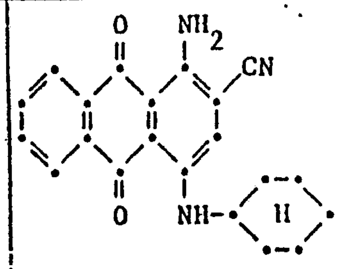 | 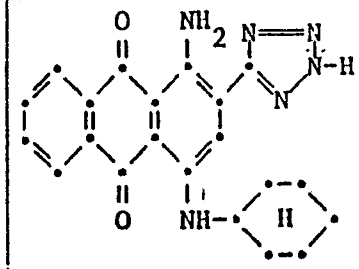 | Diäthylsulfat | 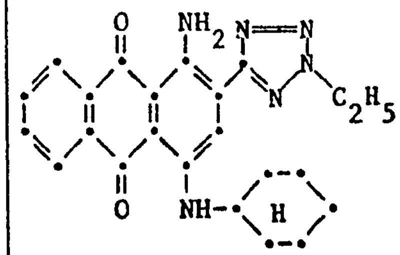 | blau |
| 43 | 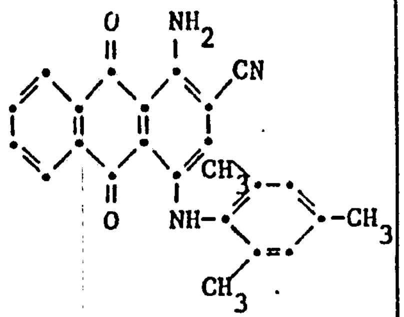 | 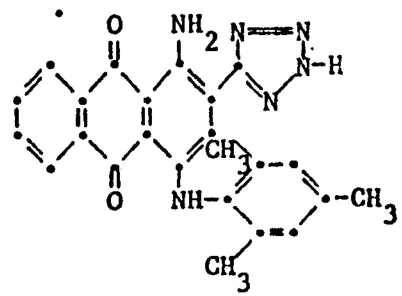 | Dimethylsulfat | 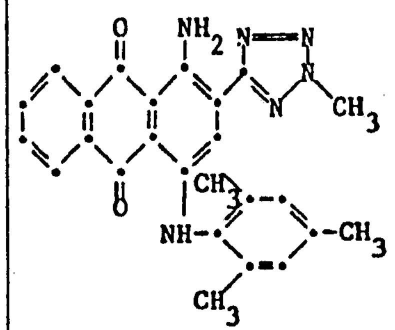 | blau |
| 44 | 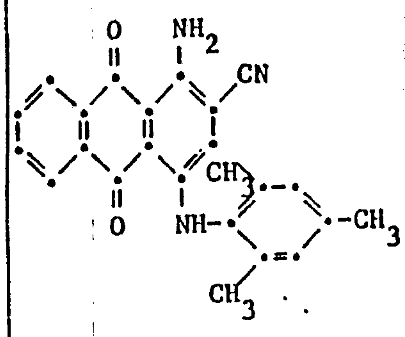 | 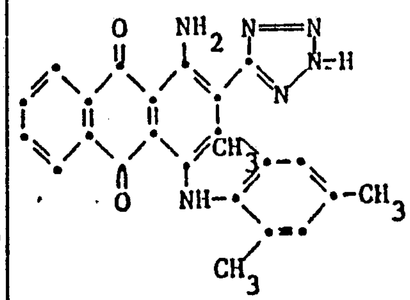 | Diäthylsulfat | 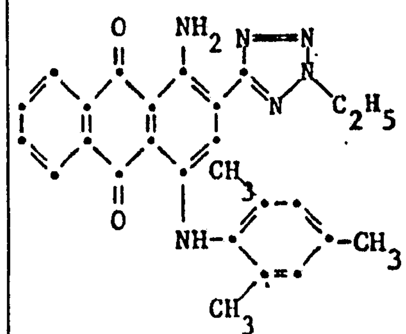 | blau |

**Beispiel 45:**

12,5 T 1-Amino-4-anilinoanthrachinon-2-sulfonsÄure (Na-Salz), 4,8 T Ammoniumbicarbonat und 7,4 T Natriumcyanid werden in 80 T Dimethylsulfoxyd 15 Stunden bei 100° gerührt. Das Reaktionsgemisch wird mit 160 T Wasser verdünnt und noch 4 Stunden bei Raumtemperatur (ca.20°) zur Reoxydation weitergerührt. Das ausgefallene Produkt der Formel

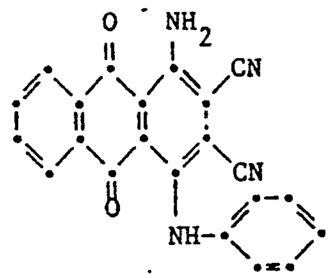

wird abgesaugt, mit warmem Wasser gewaschen und getrocknet. Ausbeute: 10,5 T. Das so erhaltene Produkt enthÄlt kein 1-Amino-2-cyan-4-anilino-anthrachinon.

**Beispiel 46:**

Man verfÄhrt wie im Beispiel 45 angegeben, vervendet jedoch anstelle von 12,5 T 1-Amino-4-anilino-anthrachinon-2-sulfonsÄure (Na-Salz) die Äquivalente Menge der in der Tabelle 3 angegebenen Verbindungen. Man erhÄlt jeweils die entsprechende 2, 3-Dicyanverbin-dung.

**Tabelle 3**

| 1 | 2 |
|---|---|
| Bsp. | |
| 47 | 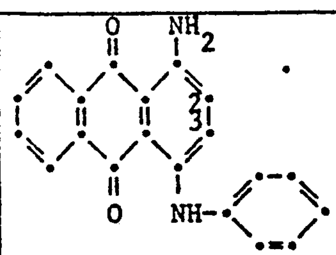 |
| 48 | 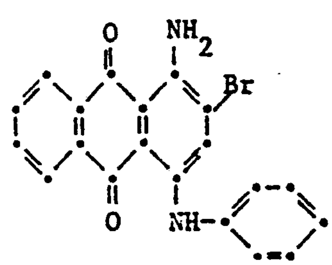 |

**Tabelle 3** (Fortsetzung)

| 1 | 2 |
|---|---|
| Bsp. | |
| 49 | 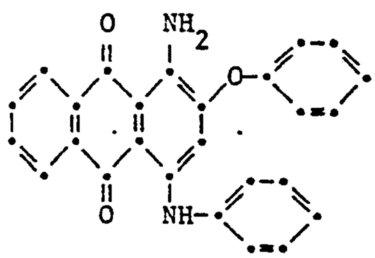 |
| 50 | 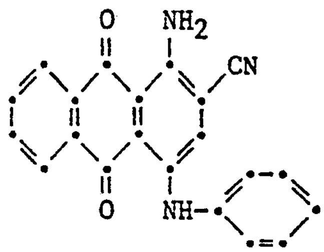 |
| 51 | 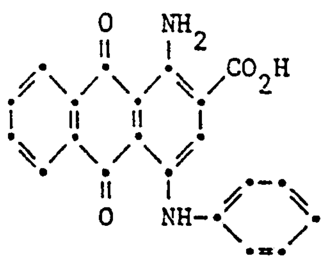 |
| 52 | 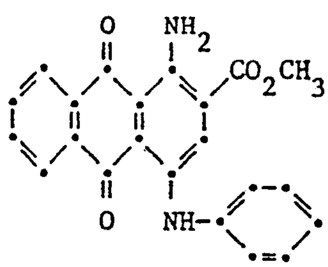 |
| 53 | 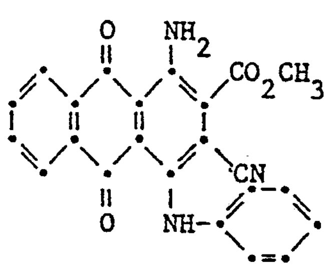 |

**Beispiel 54:**

Ersetzt man im Beispiel 45 die 12,5 T 1-Amino-4-anilino-anthrachinon-2-sulfonsÄure (Na-Salz) durch Äquivalente Teile der in der Tabelle 4, Kolonne 2, angegebenen Verbindungen, so erhÄlt man unter den gleichen Reaktionsbedingungen die entsprechenden 2, 3-Dicyan-anthrachinone, die in der Kolonne 3 angegeben sind.

**Tabelle 4**

FIG29/220

| 1 | 2 | 3 |
|---|---|---|
| Besp. | | |
| 55 | 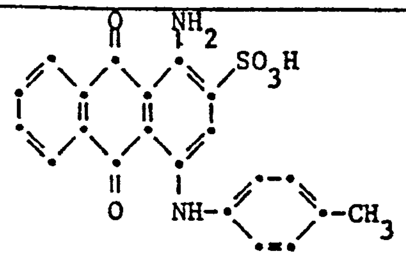 | 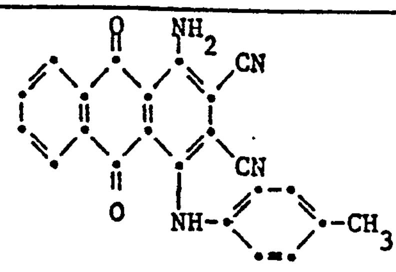 |
| 56 | 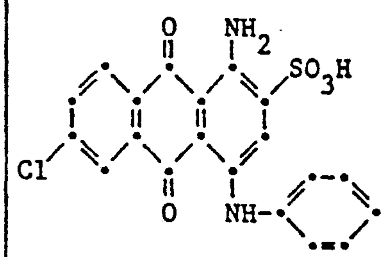 | 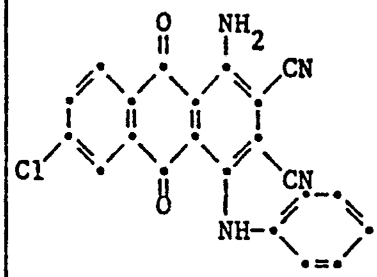 |
| 57 | 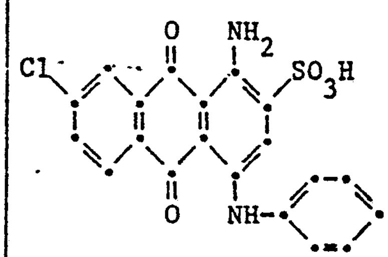 | 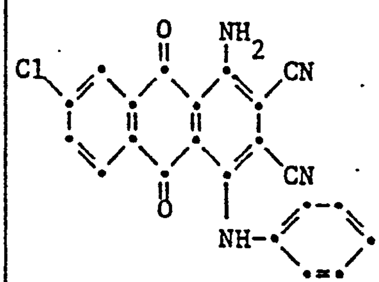 |
| 58 | 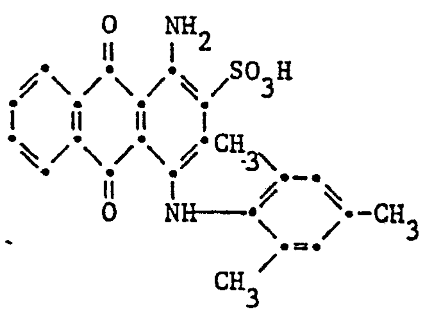 | 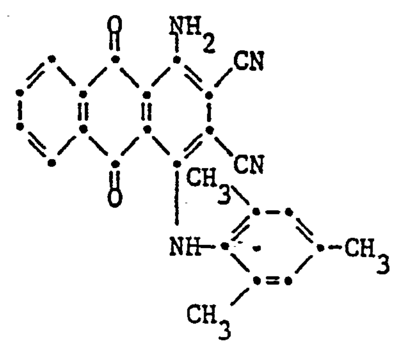 |
| 59 | 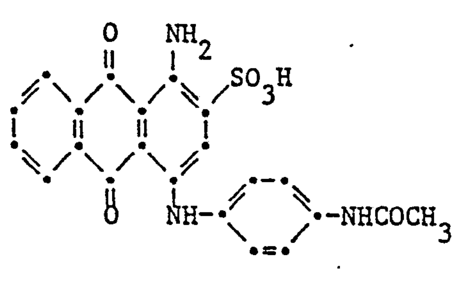 | 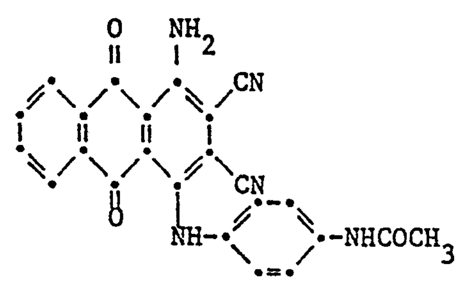 |

**Tabelle 4** (Fortsetzung)

| 1 | 2 | 3 |
|---|---|---|
| Bsp. | | |
| 60 | 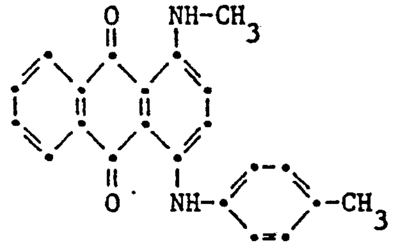 | 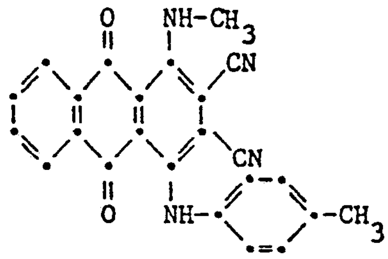 |
| 61 | 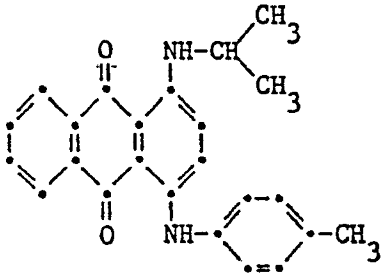 | 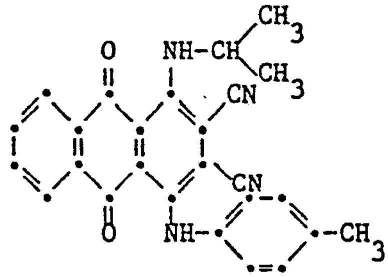 |
| 62 | 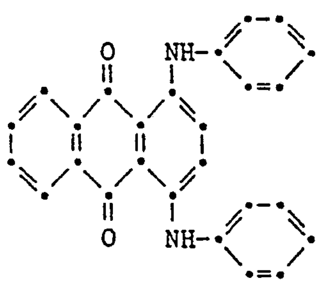 | 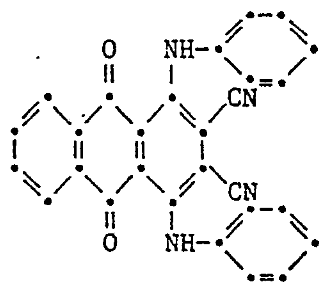 |
| 63 | 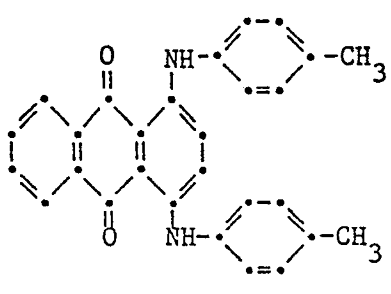 | 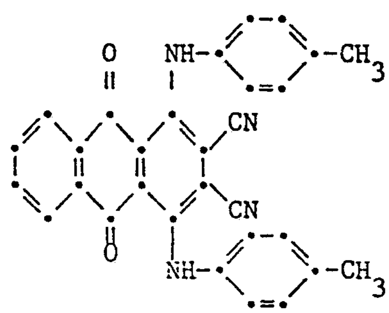 |

**Tabelle 4** (Fortsetzung)

| 1 | 2 | 3 |
|---|---|---|
| Bsp. | | |
| 64 | 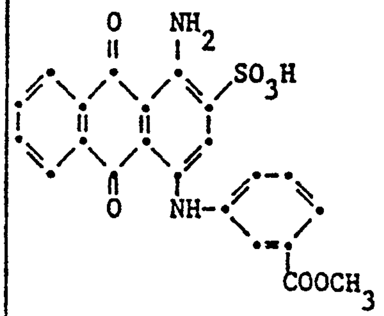 | 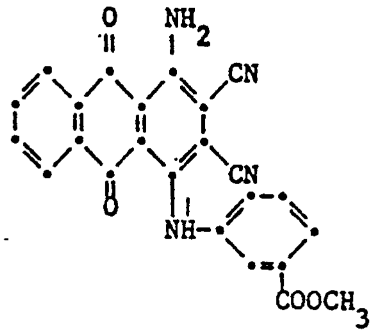 |
| 65 | 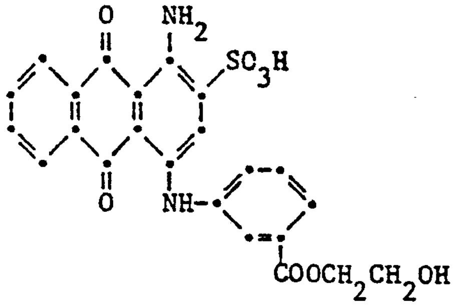 | 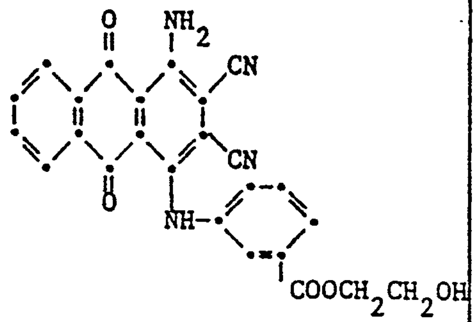 |
| 66 | 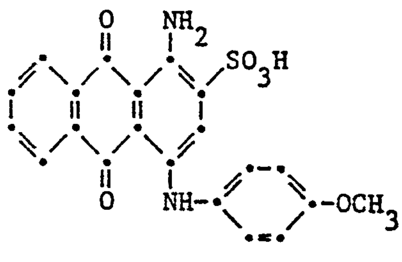 | 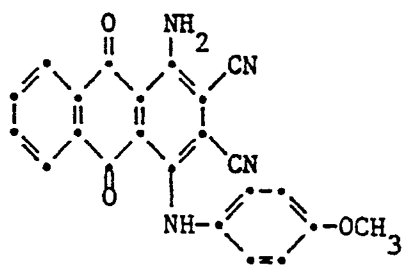 |
| 67 | 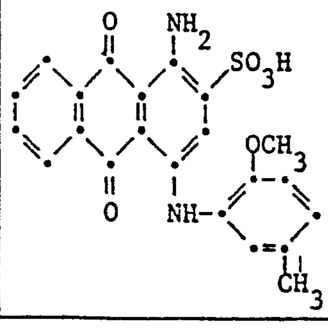 | 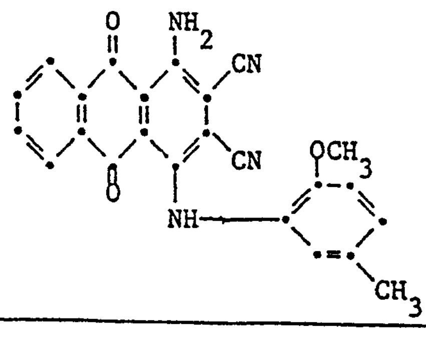 |

**Beispiel 68:**

Man mischt 1 T des trockenen, coupagefreien Farbstoffs gemÄss Beispiel 1 in einer Glasperlmühle zusammen mit 1 T Dinapthylmethdandisulfonat (Na-Salz) und Wasser und mahlt das Gemisch solange bis eine KorngrÖsse von etwa 2 µ oder kleiner erreicht ist. Die entstehende Paste, bestehend aus dem Farbstoff, Dispergator und Wasser wird anschliessend mit 3 Teilen Natriumligninsulfonat versetzt. Die erhaltene Paste wird sodann der Sprühtrocknung unterworfen, wobei ein pulverfÖrmiges FÄrbeprÄparat erhalten wird.

Dieses FÄrbeprÄparat kann zum FÄrben von Polyestermaterialien, z.B. nach dem HT-Verfahren, verwendet werden, wobei das FÄrbebad eine gute DispersionsstabilitÄt aufweist. Man erhÄlt eine blaue PolyesterfÄrbung mit guter Lichtechtheit.

**Beispiel 69:**

2 T des gemÄss Beispiel 1 erhaltenen Farbstoffes werden, in 4000 T Wasser dispergiert. Zu dieser Dispersion gibt man 12 T des Natriumsalzes von o-Phenylphenol sowie 12 T Diammoniumphosphat und fÄrbt 100 T Garn aus PolyÄthylenglykoltherephthalat 90 Minuten lang bei 95 bis 98° in dieser Flotte.

Die FÄrbung wird anschliessend gespült und mit wÄssriger Natronlauge und einem Dispergator nachbehandelt. Man erhÄlt so eine brillante licht- und sublimierechte blaue FÄrbung.

**Beispiel 70:**

1 T des gemÄss Beispiel 1 erhaltenen Farbstoffes wird mit 2 T einer 50%igen wÄssrigen LÖsung des Natriumsalzes der DinaphthylmethandisulfonsÄure nass vermahlen und getrocknet.

Dieses FarbstoffprÄparat wird mit 40 T einer 10%igen wÄssrigen LÖsung des Natriumsalzes der N-Benzylheptadecyl-benzimidazoldisulfonsÄure verrührt und 4 T einer 40%igen EssigsÄurelÖsung zugegeben. Durch Verdünnen mit Wasser wird daraus ein FÄrbebad von 4000 T bereitet.

In dieses Bad geht man bei 50° mit 100 T eines Polyesterfaserstoffes ein, steigert die Temperatur innert einer halben Stunde auf 120 bis 130° und fÄrbt eine Stunde in geschlossenem GefÄss bei dieser Temperatur. Anschliessend wird gut gespült. Man erhÄlt eine brillante blaue FÄrbung von guter Lichtechtheit.

**Beispiel 71:**

PolyÄthylenglykolterephthalatgewebe wird auf einem Foulard bei 40° mit einer Flotte folgender Zusammensetzung imprÄgniert: 20 T des gemÄss Beispiel 1 erhaltenen Farbstoffes fein dispergiert
in
10 T Natriumalginat
20 T TriÄthanolanin
20 T OctylphenolpolyglykolÄther und
930 T Wasser.

Das auf ca. 100% abgequetschte Gewebe wird bei 100° getrocknet und anschliessend wÄhrend 30 Sekunden bei einer Temperatur von 210° fixiert. Die gefÄrbte Ware wird mit Wasser gespült, geseift und getrocknet. Man erhÄlt eine brillante, lichtechte blaue FÄrbung.

**Patentansprüche**

1. 1,4-Diaminoanthrachinonverbindungen der Formel I

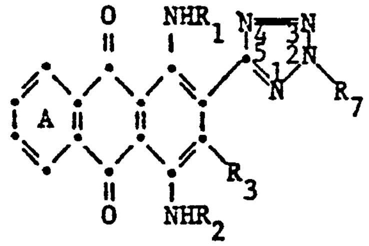 (I),

worin bedeuten:

$R_1$ und $R_2$ unabhÄngig voneinander Wasserstoff, einen gegebenenfalls substituierten $C_1$-$C_6$ Alkylrest, einen gegebenenfalls substituierten $C_5$-$C_8$ Cycloalkylrest oder einen gegebenenfalls substituierten Phenylrest;

$R_3$ Wasserstoff, Cyan oder $COOR_4$ oder $CON.R_5.R_6$, worin bedeuten: $R_4$ gegebenenfalls substituiertes $C_1$-$C_{10}$ Alkyl oder $C_5$-$C_8$ Cycloalkyl und $R_5$ und $R_6$ unabhÄngig voneinander Wasserstoff, $C_1$-$C_{10}$ Alkyl oder $R_5$ und $R_6$ bilden zusammen mit dem N-Atom einen Pyrrolidin-, Piperidin-, Morpholin- oder Piperazinring;

$R_7$ gegebenenfalls substituiertes $C_1$-$C_{10}$ Alkyl oder $C0.R_{12}$, worin $R_{12}$ gegebenenfalls substituiertes $C_1$-$C_6$ Alkyl oder Phenyl darstellt und wobei der Benzorest A substituiert sein kann, sowie die Isomeren und Mischungen dieser 1, 4-Diaminoanthrachinonverbindungen.

2. 1, 4-Diaminoanthrachinonverbindungen gemÄss Anspruch 1, dadurch gekennzeichnet, dass $R_1$ und $R_2$ je Wasserstoff bedeuten.

3. 1, 4-Diaminoanthrachinonverbindungen gemÄss Anspruch 1, dadurch gekennzeichnet, dass $R_3$ die CN-Gruppe bedeutet.

4. 1, 4-Diaminoanthrachinonverbindungen gemÄss Anspruch 1, dadurch gekennzeichnet, dass $R_7$ entweder unsubstituiertes $C_1$-$C_4$-Alkyl oder durch Phenyl substituiertes $C_1$-$C_4$-Alkyl bedeutet.

5. 1, 4-Diaminoanthrachinonverbindungen gemÄss Anspruch 1, dadurch gekennzeichnet, dass der Benzorest A nicht substituiert ist.

6. 1, 4-Diaminoanthrachinonverbindungen gemÄss Anspruch 1, dadurch gekennzeichnet, dass bedeuten: $R_1$ Wasserstoff, $R_2$ Wasserstoff, gegebenenfalls durch $C_1$-$C_4$-Alkyl substituiertes Phenyl, $C_1$-$C_4$-Alkyl, Cyclohexyl oder $C_2H_4OCH_3$; $R_3$ Wasserstoff oder CN, und $R_7$ $C_1$-$C_4$-Alkyl, Benzyl oder $CH_2.CH_2.CH_3.O.COCH_3$ und wobei der Benzorest A nicht substituiert ist.

7. Verfahren zur Herstellung der 1,4-Diaminoanthrachinonverbindungen gemÄss Anspruch 1, dadurch gekennzeichnet, dass man entweder

a) eine Verbindung der Formel II

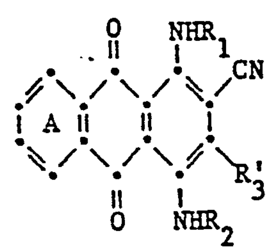 (II),

worin $R_1$ und $R_2$ die unter Formel I gemÄss Anspruch 1 angegebene Bedeutung haben und $R_3'$ Wasserstoff oder CN bedeutet, mit einem Azid in einem polaren aprotischen LÖsungsmittel, gegebenenfalls in Gegenwart eines Ammoniumsalzes, bei einer Temperatur von 70 bis 130° C zu einer Tetrazolverbindung der Formel III

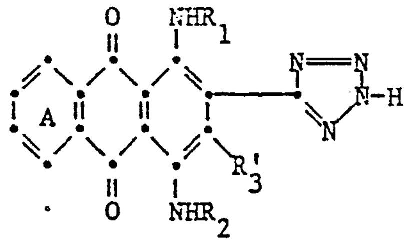 (III),

worin die Symbole $R_1$, $R_2$ und $R_3'$ die angegebene Bedeutung haben, umsetzt und diese Tetrazolverbindung anschliessend mit einer den Substituenten $R_7$ einführenden Verbindung alkyliert bzw. acyliert, oder

b) indem man in einem Eintopfverfahren, ausgehend von der Verbindung der Formel II, den Ringschluss zur Tetrazolgruppe und die Alkylierung bzw. Acylierung nacheinander ohne Zwischenisolation der Tetrazolverbindung der Formel III durchführt, wobei man die 1, 4-Diaminoanthra-chinonverbindungen der Formel I erhÄlt, worin $R_3$ Wasserstoff oder CN bedeutet und die CN-Gruppe gegebenenfalls zur COOH-Gruppe verseift, welche dann über das CarbonsÄurehalogenid verestert werden kann bzw. zum CarbonsÄureamid umgesetzt werden kann, wobei man die Verbindungen der Formel I erhÄlt, worin $R_3$ die $COOR_4$ bzw. $CONR_5$-$R_6$-Gruppe darstellt, und für den Fall, dass der Substituent $R_7$ eine freie OH-Gruppe enthÄlt, so kann diese anschliessend noch acyliert werden.

8. Verwendung der 1, 4-Diaminoanthrachinonverbindungen gemÄss Anspruch 1 bzw. der nach Anspruch 7 erhaltenen 1, 4-Diaminoanthrachinonverbin-dungen als Farbstoffe zum FÄrben und Bedrucken von Textilmaterialien.

9. Die gemÄss Anspruch 8 gefÄrbten und bedruckten Textilmaterialien.

10. Zwischenprodukte der Formel VI

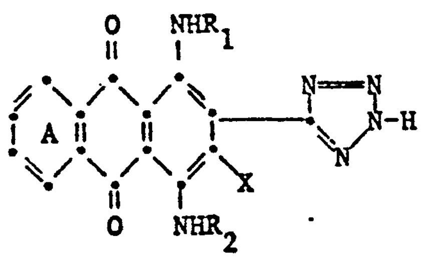 (VI),

worin $R_1$ und $R_2$ die unter Formel I angegebene Bedeutung aufweisen und X die CN, COOH, COO-Alkyl($C_1$-$C_4$) oder $CONR_5.R_6$ Gruppe darstellt, wobei $R_5$ und $R_6$ die im Anspruch 1 angegebene Bedeutung haben.

11. Verfahren zur Herstellung von Verbindungen der Formel

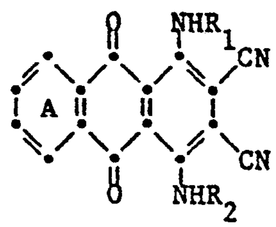

,

indem man eine Verbindung der Formel IV

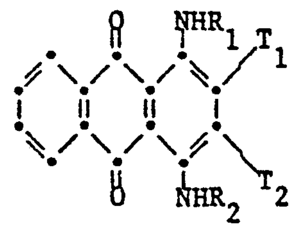

(IV),

worin eines von $R_1$ und $R_2$ Wasserstoff bedeutet und das andere einen gegebenenfalls substituierten $C_1$-$C_6$-Alkylrest, einen gegebenenfalls substituierten $C_5$-$C_8$-Cycloalkylrest oder einen gegebenenfalls substituierten Phenylrest oder worin $R_1$ und $R_2$ unabhÄngig voneinander einen gegebenenfalls substituierten $C_1$-$C_6$-Alkylrest, einen gegebenenfalls substituierten $C_5$-$C_8$-Cycloalkylrest oder einen gegebenenfalls substituierten Phenylrest bedeuten; $T_1$ und $T_2$ unabhÄngig voneinander Wasserstoff, Halogen, $SO_3H$, phenoxy, COOH oder COO-Alkyl($C_1$-$C_4$) bedeuten oder eines von beiden T bedeutet CN und das andere T hat eine der angegebenen Bedeutung, mit einem Alkalicyanid gegebenenfalls in Gegenwart eines Ammonsalzes in Dimethylsulfoxyd bei einer Temperatur von 80° bis 120° C, gegebenenfalls in Anwesenheit eines Oxydationsmittels umsetzt.

## Claims

1. A 1, 4-diaminoanthraquinone compound of the formula I

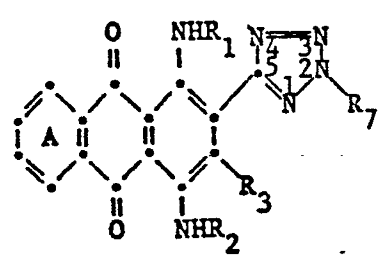

(I)

wherein
$R_1$ and $R_2$ independently of each other are hydrogen, an unsubstituted or substituted $C_1$-$C_6$alkyl group, an

unsubstituted or substituted $C_5$-$C_8$cycloalkyl group, or an unsubstituted or substituted phenyl group;

$R_3$ is hydrogen, cyano, or $COOR_4$ or $CON.R_5.R_6$, wherein $R_4$ is unsubstituted or substituted $C_1$-$C_{10}$alkyl or $C_5$-$C_8$cycloalkyl, and $R_5$ and $R_6$ independently of each other are hydrogen or $C_1$-$C_{10}$alkyl, or $R_5$ and $R_6$ together with the N atom form a pyrrolidine, piperidine, morpholine or piperazine ring;

$R_7$ is unsubstituted or substituted $C_1$-$C_{10}$alkyl or $CO.R_{12}$, in which $R_{12}$ is unsubstituted or substituted $C_1$-$C_6$alkyl or phenyl,

and wherein the benzo radical A may be substituted; or an isomer or mixture of these 1, 4-diaminoanthraquinone compounds.

2. A 1, 4-diaminoanthraquinone compound according to claim 1, wherein $R_1$ and $R_2$ are each hydrogen.

3. A 1, 4-diaminoanthraquinone compound according to claim 1, wherein $R_3$ is the CN group.

4. A 1, 4-diaminoanthraquinone compound according to claim 1, wherein $R_7$ is either unsubstituted $C_1$-$C_4$alkyl or $C_1$-$C_4$alkyl substituted by phenyl.

5. A 1, 4-diaminoanthraquinone compound according to claim 1, wherein the benzo radical A is not substituted.

6. A 1, 4-diaminoanthraquinone compound according to claim 1, wherein $R_1$ is hydrogen, $R_2$ is hydrogen, phenyl which is unsubstituted or substituted by $C_1$-$C_4$alkyl, or it is $C_1$-$C_4$alkyl, cyclohexyl or $C_2H_4OCH_3$, $R_3$ is hydrogen or CN, and $R_7$ is $C_1$-$C_4$alkyl, benzyl or $CH_2.CH_2.CH_3.0.COCH_3$, and wherein the benzo radical A is not substituted.

7. A process for the preparation of a 1, 4-diamino-anthraquinone compound according to claim 1, which process comprises either

a) reacting a compound of the formula II

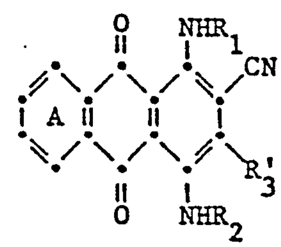

(II),

wherein $R_1$ and R are as defined for formula I according to claim 1, and $R'_3$ is hydrogen or CN, with an azide in a polar aprotic solvent, optionally in the presence of an ammonium salt, at a temperature in the range from 70 to 130°C, to give a tetrazole compound of the formula III

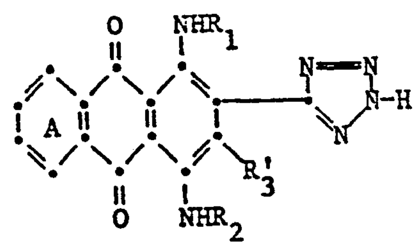

(III),

wherein the symbols $R_1$, $R_2$, and $R'_3$ have the given meanings, and subsequently alkylating or acylating this tetrazole compound with a compound which introduces the substituent $R_7$; or

b) performing in a single-vessel process, starting from the compound of the formula II, the ring closure reaction to obtain the tetrazole group, and then carrying out alkylation or acylation, without intermediate isolation of the tetrazole compound of the formula III, affording the 1, 4-diaminoanthraquinone compounds of the formula I, wherein $R_3$ is hydrogen or CN, which CN group may be saponified to the COOH group, which may then be esteriiied via the carboxylic acid halide, or reacted to give the carboxamide, affording the compounds of the formula I, wherein $R_3$ is the $COOR_4$ or $CONR_5$-$R_6$ group respectively; and where the substituent $R_7$ contains a free OH group, said group may subsequently be acylated.

8. Use of a 1, 4-diaminoanthraquinone compound according to claim 1, or of a 1, 4-diaminoanthraquinone compound obtained according to claim 7, as a dye for dyeing or printing textile materials.

9. The textile materials dyed or printed according to claim 8.

10. An intermediate of the formula VI

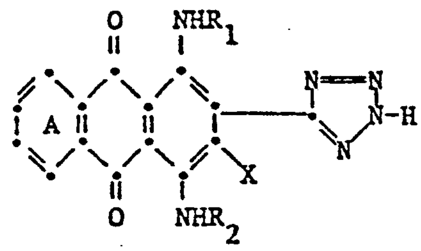

(VI),

wherein $R_1$ and $R_2$ are as defined for formula I, X is the CN, COOH, COO-$C_1$-$C_4$alkyl or $CONR_5.R_6$ group, and $R_5$ and $R_6$ are as defined in claim 1.

11. A process for the preparation of a compound of the formula

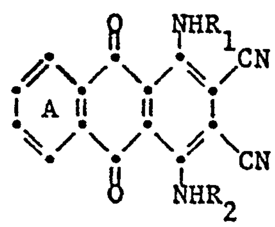

by reacting a compound of the formula IV

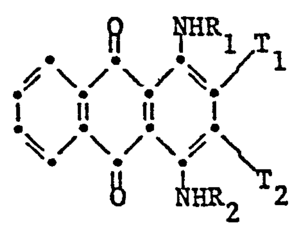

(IV),

wherein one of $R_1$ and $R_2$ is hydrogen, and the other is an unsubstituted or substituted $C_1$-$C_6$alkyl group, an unsubstituted or substituted $C_5$-$C_8$cycloalkyl group or an unsubstituted or substituted phenyl group, or wherein $R_1$ and $R_2$ independently of each other are an unsubstituted or substituted $C_1$-$C_6$alkyl group, an unsubstituted or substituted $C_5$-$C_8$cycloalkyl group or an unsubstituted or substituted phenyl group, and $T_1$ and $T_2$ independently of each other are hydrogen, halogen, $SO_3H$, phenoxy, COOH or COO-$C_1$-$C_4$alkyl, or one of the two symbols T is CN and the other T has one of the given meanings, with an alkali cyanide, optionally in the presence of an ammonium salt, in dimethyl sulfoxide at a temperature in the range from 80 to 120°C, optionally in the presence of an oxidising agent.

**Revendications**

1. Composés 1, 4-diamino-anthraquinoniques de formule I

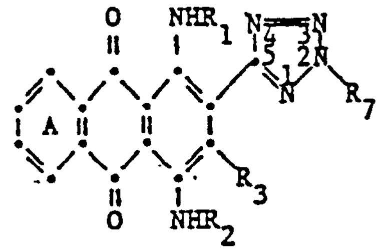

(I),

dans laquelle
$R_1$ et $R_2$ représentent chacun, indépendamment l'un de l'autre, un atome d'hydrogène, un résidu alkyle en $C_1$-$C_6$ éventuellement substitué, un résidu cyclo-alkyle en $C_5$-$C_8$ éventuellement substitué ou un résidu phényle éventuellement substitué,
$R_3$ représente un atome d'hydrogène, un reste cyano ou $COOR_4$ ou CON-$R_5$-$R_6$ où $R_4$ représente un groupe alkyle en $C_1$-$C_{10}$ ou cyclo-alkyle en $C_5$ $C_8$ éventuellement substitués, et $R_5$ et $R_6$ sont chacun, indépendamment l'un de l'autre, un atome d'hydrogène, un groupe alkyle en $C_1$-$C_{10}$, ou bien $R_5$ et $R_6$ forment ensemble avec l'atome d'azote un noyau pyrrolidine, pipéridine, morpholine ou pipérazine;
$R_7$ représente un radical alkyle en $C_1$-$C_{10}$ éventuellement substitué ou $COR_{12}$, où $R_{12}$ représente un groupe alkyle en $C_1$-$C_6$ ou phényle éventuellement substitués, et le reste benzénique A pouvant être substitué, ainsi que les isomères et les méanges de ces composés 1, 4-diamino-anthraquinoniques.

2. Composés 1, 4-diamino-anthraquinoniques selon la revendication 1, caractérisés par le fait que $R_1$ et $R_2$ représentent chacun un atome d'hydrogène.

3. Composés 1, 4-diamino-anthraquinoniques selon la revendication 1, caractérisés par le fait que $R_3$ représente le groupe CN.

4. Composés 1, 4-diamino-anthraquinoniques selon la revendication 1, caractérisés par le fait que $R_7$ représente soit un radical alkyle en $C_1$-$C_4$ non substitué, soit un radical alkyle en $C_1$-$C_4$ substitué par un groupe phényle.

5. Composés 1, 4-diamino-anthraquinoniques selon la revendication 1, caractérisés par le fait que le reste benzénique A n'est pas substitué.

6. Composés 1, 4-diamino-anthraquinoniques selon la revendication 1, caractérisés par le fait que $R_1$ est un atome d'hydrogène; $R_2$ est un atome d'hydrogène, un résidu phényle, alkyle en $C_1$-$C_4$, cyclohexyle, éventuellement substitué par un groupe alkyle en $C_1$-$C_4$, ou $C_2H_4OCH_3$; $R_3$ est un atome d'hydrogène ou CN, et $R_7$ est un radical alkyle en $C_1$-$C_4$, benzyle ou $CH_2$-$CH_2$-$CH_2$-0-$COCH_3$, et dans lesquels le résidu benzénique A n'est pas substitué.

7. Procédé pour la préparation de composés 1, 4-diamino-anthraquinoniques selon la revendication 1, caractérisés par le fait que l'on fait soit
a) réagir un composé de formule II

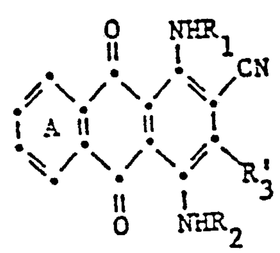

(II),

dans laquelle $R_1$ et $R_2$ ont la signification donnée dans la revendication 1 sous la formule I, et R3' représente un atome d'hydrogène ou CN, avec un azide dans un solvant polaire aprotique, éventuellement en présence

d'un sel d'ammonium, à une température de 70 à 130'C, pour aboutir à un composé tétrazolique de formule III

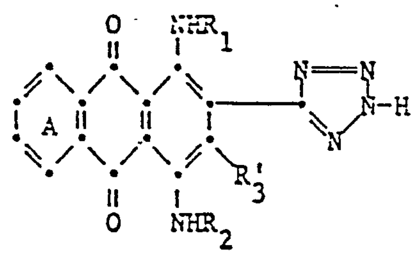

(III),

dans laquelle les symboles $R_1$, $R_2$ et $R_3'$ ont la signification que l'on a indiquée, et ce composé tétrazolique est ensuite alkylé ou acylé avec un composè introduisant le substituant $R_7$, soit

b) en effectuant, successivement dans un procédé en une opèration, en partant du compose de formule II, la cyclisation aboutissant au groupement tétrazolique et l'alkylation ou l'acylation, sans isoler entre-temps le composé tétrazolique de formule III, ce par quoi on obtient les composés 1, 4-diamino-anthraquinoniques de formule I dans lesquels $R_3$ représente un atome d'hydrogène ou CN, et en saponifiant èventuellement le groupe CN en groupe COOH, lequel peut ensuit être estérifié par l'halogénure d'acide carboxylique ou peut être transformé en amide carboxylique, ce par quoi on obtient les composés de formule I dans lesquels $R_3$ représente le groupe $COOR_4$ ou $CONR_5$-$R_6$ et, dans le cas où le substituant $R_7$ contient un groupe OH libre, celui-ci peut être alors encore acylé.

8. Utilisation des composés 1, 4-diamino-anthraquinoniques selon la revendication 1 ou des composès 1, 4-diamino-anthraquinoniques obtenus selon la revendication 7, en tant que colorants pour la teinture et l'impression de matériaux textiles.

9. Les matériaux textiles teints et imprimés selon la revendication 8.

10. Produits intermédiaires de formule VI

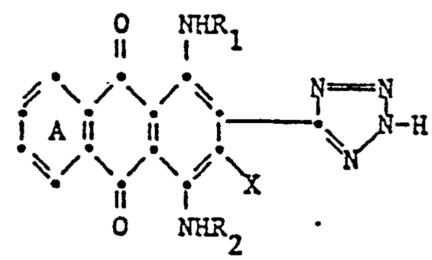

(VI),

dans laquelle $R_1$ et $R_2$ ont la signification donnée sous la formule I et X représente le groupe CN, COOH, COO-alkyle en $C_1$-$C_4$ ou $CONR_5$-$R_6$, $R_5$ et $R_6$ ayant la signification donnée dans la revendication 1.

11. Procédé pour la préparation de composés de formule

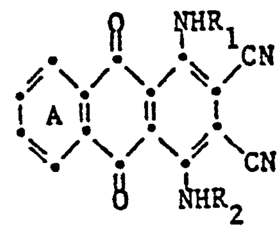 ,

dans lequel on fait réagir un composé de formule IV

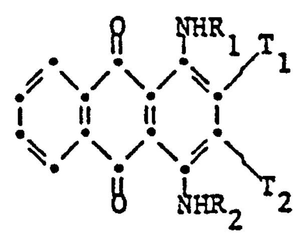 (IV),

dans laquelle un des résidus $R_1$ et $R_2$ est un atome d'hydrogène et l'autre représente un résidu alkyle en $C_1$-$C_6$ éventuellement substitué un résidu cyclo-alkyle en $C_5$-$C_8$ éventuellement substitué ou un résidu phényle éventuellement substitué, ou bien dans laquelle $R_1$ et $R_2$ représentent chacun indépendamment l'un de l'autre un résidu alkyle en $C_1$-$C_6$ éventuellement substitué, un résidu cyclo-alkyle en $C_5$-$C_8$ éventuellement substitué ou un résidu phényle éventuellement substitué; $T_1$ et $T_2$ représentent chacun, indépendamment l'un de l'autre, un atome d'hydrogène, d'halogène, un radical $SO_3H$, phénoxy, COOH ou COO-alkyle en $C_1$-$C_4$, ou bien un des deux radicaux T représente CN et l'autre T a l'une des significations données, avec un cyanure alcalin éventuellement en présence d'un sel d'ammonium dans du diméthylsulfoxyde, à une température de 80°C à 120°C, éventuellement en présence d'un oxydant.